# EUROPEAN PATENT APPLICATION

(11) **EP 4 687 274 A1**
(43) Date of publication of application: **04.02.2026**
(21) Application number: 25193527.6
(22) Date of filing: 01.08.2025
(51) Int. Cl.: H02M 1/00, H02M 1/32, H02M 5/297

(54) **AC-AC CONVERTER**

(30) Priority: 01.08.2024 US 202463678225 P
(71) Applicant: Delta Electronics, Inc., Neihu, Taipei 11491 (TW)
(72) Inventor: Zhang, Chi, Morrisville, NC 27560 (US); Wang, Ruxi, Morrisville, NC 27560 (US); Barbosa, Peter Mantovanelli, Morrisville, NC 27560 (US)
(74) Representative: Uexküll & Stolberg

(57) **Abstract**

An AC-AC converter (1a - FIG. 3A) is provided. The AC-AC converter (1a) includes a primary circuit (11), a secondary circuit (12), a transformer (TR), a resonant tank, and a controller (2). The primary circuit (11) includes four bidirectional switches, each including upper and lower switches (S1a, S2a, S3a, S4a, S1b, S2b, S3b, S4b) connected back-to-back and capable of operating in four quadrants in a voltage-current plane. The first and fourth bidirectional switches operate synchronously, and the second and third bidirectional switches operate synchronously. When the input voltage (Vin) is greater than a predefined threshold voltage (Vth), the first and second lower switches (S1b, S3b) are maintained in an on state, and the first and second upper switches (S1a, S3a) operate with PWM signals and are complementary to each other. When the input voltage (Vin) is smaller than an additive inverse of the predefined threshold voltage (Vth), the first and second upper switches (S1a, S3a) are maintained in the on state, and the first and second lower switches (S1b, S3b) operate with PWM signals and are complementary to each other.

## Description

### FIELD OF THE INVENTION

The present disclosure relates to an AC-AC converter, and more particularly to a bidirectional AC-AC converter for high-voltage and high-power applications.

### BACKGROUND OF THE INVENTION

The resonant converter, which employs a resonant-tank circuit to shape the switch voltage and/or current waveforms to minimize switching losses and allow high-frequency operation, has been widely employed as an isolated DC/DC converter, due to its high efficiency, simple structure achieved by magnetic integration, soft switching on both primary and secondary switches, and capability suitable for applications with wide voltage ranges.

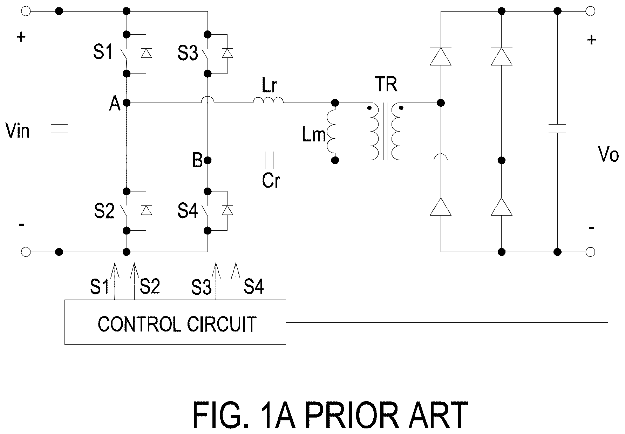

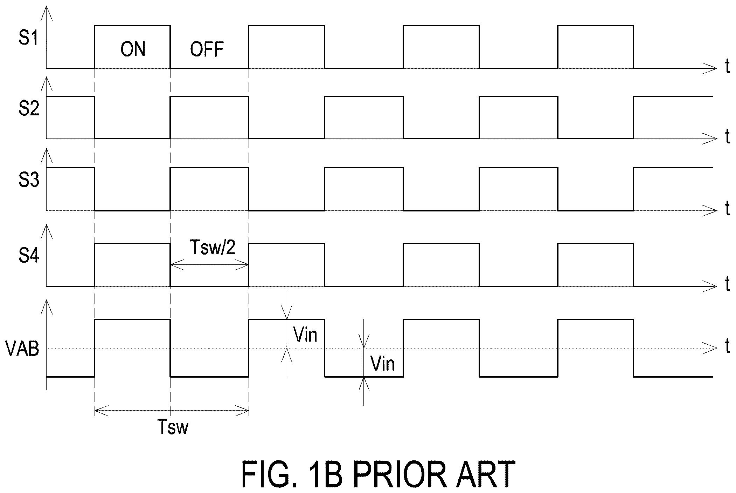

FIGS. 1A and 1B respectively show a conventional full-bridge LLC resonant converter under closed-loop voltage control and its timing diagrams of control signals for switches S1 to S4 and a primary-side full-bridge output voltage VAB (i.e., the voltage between the nodes A and B). The output voltage Vo may be regulated by controlling the switching frequency of these primary-side switches. The highest efficiency is attained when the LLC resonant converter operates at a resonant frequency, which is determined by a resonant inductor Lr and a resonant capacitor Cr, and when the DC voltage gain equals the turns ratio of the transformer TR. The LLC resonant converter should operate at its corresponding frequency range to achieve the desired output voltage range.

As shown in FIG. 1A, the resonant tank includes the resonant inductor Lr and the resonant capacitor Cr connected in series, and the circuit can be referred to as a series-resonant converter. If the magnetizing inductance Lm of transformer TR is relatively small, i.e., if it is only several times of the inductance of resonant inductor Lr, the converter can operate as an LLC series-resonant converter.

Generally, resonant converters are controlled by variable switching-frequency control. During above-resonant-frequency operations, the resonant converters operate with zero-voltage-switching (ZVS) of the primary-side switches, while during below-resonant-frequency operations, the resonant converters operate with zero-current switching (ZCS).

Typical timing diagrams of switch-control signals for the series-resonant converter in FIG. 1A operating with ZVS is shown in FIG. 1B. As shown in FIG. 1B, all switches S1, S2, S3, and S4 operate with the same duty cycle of 50%. The primary-side switches in the same leg (i.e., the switches S1 and S2 in the first leg or the switches S3 and S4 in the second leg) operate in a complementary fashion to avoid cross-conduction. The frequency of the primary-side switches is determined by a feedback control loop that is employed to regulate the output. To achieve ZVS in practical implementations, the duty cycles of the primary-side switches are set to a value slightly less than 50% by introducing a short delay (or dead time) between the turn-off and the turn-on of the complementary operated same-leg switches. During this dead time, the current is commutated from the switch of the device that is being turned off to the antiparallel diode of the other device which creates a condition for its subsequent ZVS turn-on.

The full-bridge structure is normally used in less than 850V DC input voltage applications when 1.2kV devices are applied. In high-input voltage applications, the three-level topology is more attractive, because of the fact that each switching device needs to block only one-half of the input voltage.

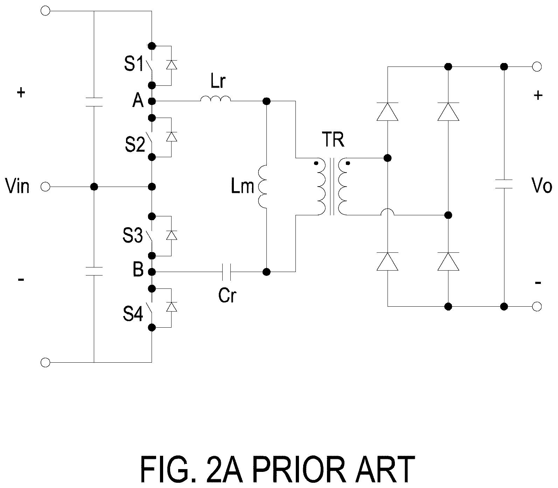

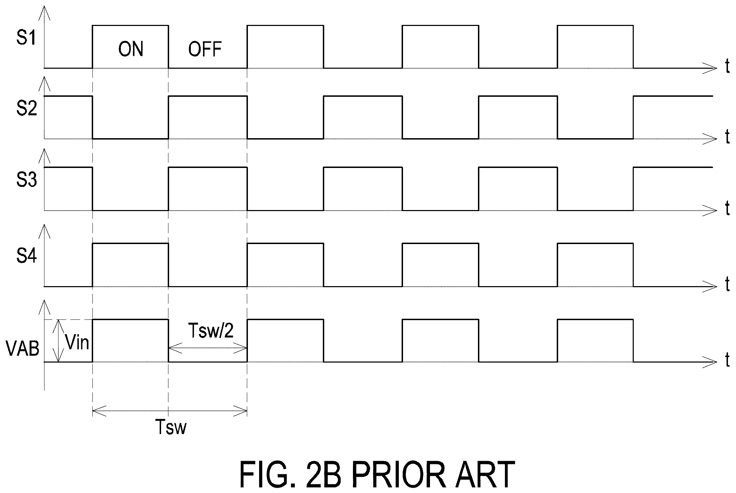

FIGS. 2A and 2B respectively show a conventional serial half-bridge resonant converter and its timing diagrams of control signals for switches S1 to S4 and a primary-side full-bridge output voltage VAB. The serial half-bridge resonant converter is also controlled by variable switching-frequency control. As shown in FIG. 2B, all switches S1, S2, S3, and S4 operate with the same duty cycle of 50%. The primary-side switches in the same leg (i.e., the switches S1 and S2 in the first leg or the switches S3 and S4 in the second leg) operate in a complementary fashion to avoid cross-conduction. Switches S1 and S4 have the same switch control signals, while switches S2 and S3 have the same switch control signals. The frequency of the primary-side switches is determined by a feedback control loop that is employed to regulate the output.

Generally, because semiconductor devices can only block voltage in one direction, resonant converters are widely used in DC-DC converters. To implement a resonant converter in AC-AC applications, such as solid-state transformers, usually one AC-DC stage is deployed in front of it where a DC-link capacitor decouples these two stages. Another DC-AC inverting stage converts the output DC of the resonant converter to the desired AC voltage for the load. Consequently, the total efficiency of these three stages combined is usually not as good as conventional line transformers, which becomes a critical obstacle to promoting AC-AC converters in most power transmission and distribution applications. There is an urgent need to develop a novel AC-AC bidirectional converter that is capable of operating in high-input-voltage and high-power applications, where high efficiency, high power density, and low cost are achieved.

Therefore, there is a need of providing an AC-AC converter in order to overcome the drawbacks of the conventional technologies.

### SUMMARY OF THE INVENTION

The present disclosure provides an AC-AC converter adopting bidirectional switches to achieve high efficiency and high power density. Further, the AC-DC converter of the present disclosure can be used in high-voltage and high-power applications.

In accordance with an aspect of the present disclosure, an AC-AC converter is provided. The AC-AC converter includes a primary circuit, a secondary circuit, a transformer, a resonant tank, and a controller. The primary circuit is configured to receive an input voltage, which is AC, and includes first to fourth bidirectional switches. The first bidirectional switch and the second bidirectional switch are electrically connected in series to form a first bridge arm. The first bidirectional switch includes a first upper switch and a first lower switch connected back-to-back, and the second bidirectional switch includes a second upper switch and a second lower switch connected back-to-back. The third bidirectional switch and the fourth bidirectional switch are electrically connected in series to form a second bridge arm, which is electrically connected in parallel to the first bridge arm. The third bidirectional switch includes a third upper switch and a third lower switch connected back-to-back, and the fourth bidirectional switch includes a fourth upper switch and a fourth lower switch connected back-to-back. The first to fourth bidirectional switches are capable of operating in four quadrants in a voltage-current plane. The secondary circuit is configured to provide an output voltage, which is AC, and includes bidirectional switches capable of operating in four quadrants in the voltage-current plane. The transformer includes a primary winding and a secondary winding electrically connected to the primary circuit and the secondary circuit respectively. The resonant tank is coupled between the primary circuit and the secondary circuit, and includes a first resonant inductor and a first resonant capacitor. The first resonant inductor, the primary winding and the first resonant capacitor are electrically connected in series between a connection node of the first and second bidirectional switches and a connection node of the third and fourth bidirectional switches. The controller is configured to provide control signals for the switches of the primary circuit and the secondary circuit. A control signal of the first upper switch and a control signal of the fourth upper switch are the same, a control signal of the first lower switch and a control signal of the fourth lower switch are the same, a control signal of the second upper switch and a control signal of the third upper switch are the same, and a control signal of the second lower switch and a control signal of the third lower switch are the same. When the input voltage is greater than a predefined threshold voltage, the controller is configured to control the first lower switch and the second lower switch to maintain in an on state, and to control the control signal of the first upper switch and the control signal of the second upper switch to be PWM signals and complementary to each other. When the input voltage is smaller than an additive inverse of the predefined threshold voltage, the controller is configured to control the first upper switch and the second upper switch to maintain in the on state, and to control the control signal of the first lower switch and the control signal of the second lower switch to be PWM signals and complementary to each other.

In accordance with another aspect of the present disclosure, an AC-AC converter is provided. The AC-AC converter includes a primary circuit, a secondary circuit, a transformer, a resonant tank, and a controller. The primary circuit is configured to receive an input voltage, which is AC, and includes a first bidirectional switch, a second bidirectional switch, a third bidirectional switch and a fourth bidirectional switch, each capable of operating in four quadrants in a voltage-current plane. The first bidirectional switch and the second bidirectional switch are electrically connected in series to form a first bridge arm, and the third bidirectional switch and the fourth bidirectional switch are electrically connected in series to form a second bridge arm, and the second bridge arm is electrically connected in series to the first bridge arm. The secondary circuit is configured to provide an output voltage, which is AC, and includes bidirectional switches capable of operating in four quadrants in the voltage-current plane. The transformer includes a primary winding and a secondary winding electrically connected to the primary circuit and the secondary circuit respectively. The resonant tank is coupled between the primary circuit and the secondary circuit, and includes a first resonant inductor and a first resonant capacitor. The first resonant inductor, the primary winding and the first resonant capacitor are electrically connected in series between a connection node of the first and second bidirectional switches and a connection node of the third and fourth bidirectional switches. The controller is configured to provide control signals for the bidirectional switches of the primary circuit and the secondary circuit.

In accordance with further another aspect of the present disclosure, an AC-AC converter is provided. The AC-AC converter includes a primary circuit, a secondary circuit, a transformer, a resonant tank, and a controller. The primary circuit is configured to receive an input voltage, which is AC, and includes a first bidirectional switch, a second bidirectional switch, a third bidirectional switch, a fourth bidirectional switch and a flying capacitor. The first to fourth bidirectional switches are capable of operating in four quadrants in a voltage-current plane. The first bidirectional switch and the second bidirectional switch are electrically connected in series to form a first bridge arm, and the third bidirectional switch and the fourth bidirectional switch are electrically connected in series to form a second bridge arm, and the first bridge arm and the second bridge arm are electrically connected in series to form a switch branch. The flying capacitor is coupled between a connection node of the first and second bidirectional switches and a connection node of the third and fourth bidirectional switches. The first input capacitor and the second input capacitor are electrically connected in series to form a capacitor branch, which is electrically connected in parallel to the switch branch. The secondary circuit is configured to provide an output voltage, which is AC, and includes bidirectional switches capable of operating in four quadrants in the voltage-current plane. The transformer includes a primary winding and a secondary winding electrically connected to the primary circuit and the secondary circuit respectively. The resonant tank is coupled between the primary circuit and the secondary circuit, and includes a first resonant inductor and a first resonant capacitor. The first resonant inductor, the primary winding and the first resonant capacitor are electrically connected in series between a connection node of the second and third bidirectional switches and a connection node of the first and second input capacitors. The controller is configured to provide control signals for the bidirectional switches of the primary circuit and the secondary circuit.

### BRIEF DESCRIPTION OF THE DRAWINGS

FIGS. 1A and 1B respectively show a conventional full-bridge LLC resonant converter under closed-loop voltage control and its timing diagrams of control signals for primary-side switches and a primary-side full-bridge output voltage;
FIGS. 2A and 2B respectively show a conventional serial half-bridge resonant converter and its timing diagrams of control signals for primary-side switches and a primary-side full-bridge output voltage;
FIG. 3A illustrates a single-phase full-bridge AC-AC converter in accordance with an embodiment of the present disclosure;
FIG. 3B schematically shows a variant of the AC-AC converter of FIG. 3A;
FIG. 3C schematically shows waveforms of an input voltage, an input current, an output voltage, and an output current of the AC-AC converter of FIG. 3A;
FIG. 3D schematically shows waveforms of a primary voltage, a primary current, a secondary voltage, and a secondary current of the AC-AC converter of FIG. 3A;
FIG. 3E schematically shows control signals of the switches of the primary circuit of FIG. 3A over a line cycle;
FIG. 3F schematically shows control signals of the switches of the primary circuit of FIG. 3A when the input voltage is positive;
FIG. 3G schematically shows control signals of the switches of the primary circuit of FIG. 3A when the input voltage is negative;
FIG. 4A illustrates a generalized AC-AC converter based on the AC-AC converter shown in FIG. 3A;
FIG. 4B schematically shows an implementation of the AC-AC converter of FIG. 4A;
FIG. 5A illustrates a single-phase SHB-based (serial-half-bridge-based) AC-AC converter in accordance with an embodiment of the present disclosure;
FIG. 5B schematically shows a variant of the AC-AC converter of FIG. 5A;
FIG. 5C schematically shows waveforms of the input voltage, the input current, the output voltage, and the output current of the AC-AC converter of FIG. 5A;
FIG. 5D schematically shows waveforms of the primary voltage, the primary current, the secondary voltage, the secondary current, and a resonant capacitor voltage of the AC-AC converter of FIG. 5A;
FIG. 5E schematically shows control signals of the switches of the primary circuit of FIG. 5A over a line cycle;
FIG. 5F schematically shows control signals of the switches of the primary circuit of FIG. 5A when the input voltage is positive;
FIG. 5G schematically shows control signals of the switches of the primary circuit of FIG. 5A when the input voltage is negative;
FIG. 6 illustrates a generalized AC-AC converter based on the AC-AC converter shown in FIG. 5A;
FIG. 7A illustrates a single-phase flying-capacitor AC-AC converter in accordance with an embodiment of the present disclosure;
FIG. 7B schematically shows a variant of the AC-AC converter of FIG. 7A;
FIG. 7C schematically shows waveforms of the input voltage, the input current, a flying capacitor voltage, the output voltage, and the output current of the AC-AC converter of FIG. 7A;
FIG. 7D schematically shows control signals of the switches of the primary circuit of FIG. 7A over a line cycle;
FIG. 7E schematically shows control signals of the switches of the primary circuit of FIG. 7A when the input voltage is positive;
FIG. 7F schematically shows control signals of the switches of the primary circuit of FIG. 7A when the input voltage is negative;
FIG. 8 illustrates a generalized AC-AC converter based on the AC-AC converter shown in FIG. 7A;
FIGS. 9A, 9B, 9C, 9D, and 9E illustrates various three-phase systems in accordance with different embodiments of the present disclosure;
FIGS. 10A, 10B, 10C, and 10D schematically show four common ways to realize a bidirectional switch in the AC-AC converter of the present disclosure;
FIGS. 11A, 11B, and 11C schematically show a basic half-bridge circuit based on two bidirectional switches with an inductive load;
FIG. 12 schematically shows a control method considering sensing mismatch of both input voltage and load current in accordance with an embodiment of the present disclosure;
FIG. 13A illustrates a voltage balancing method based on the switching frequency control for the AC-AC converter in FIG. 4B, in accordance with an embodiment of the present disclosure;
FIG. 13B illustrates a voltage balancing method based on the duty cycle control for the AC-AC converter in FIG. 4B, in accordance with an embodiment of the present disclosure;
FIG. 14A illustrates a voltage balancing method based on the switching frequency control for the AC-AC converters in FIG. 6 and FIG. 8, in accordance with an embodiment of the present disclosure; and
FIG. 14B illustrates a voltage balancing method based on the duty cycle control for the AC-AC converters in FIG. 6 and FIG. 8, in accordance with an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

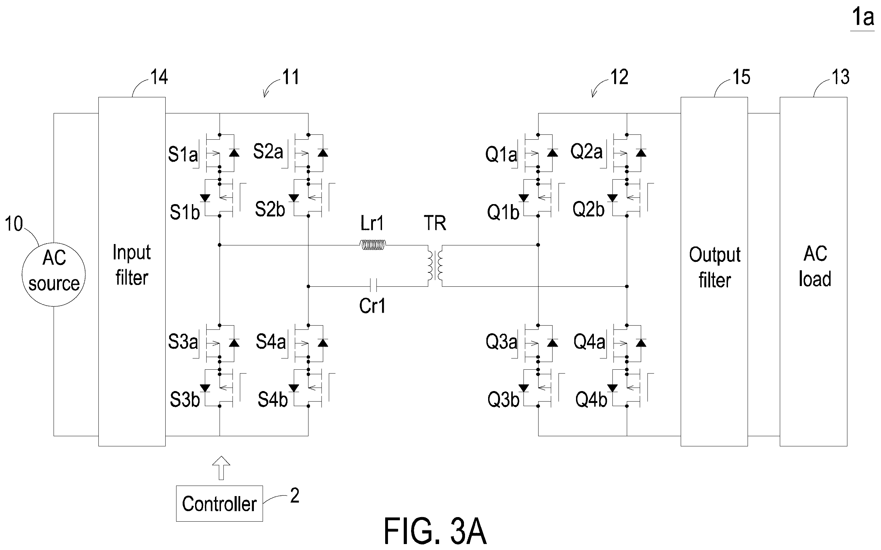

FIG. 3A illustrates a single-phase full-bridge AC-AC converter in accordance with an embodiment of the present disclosure. A shown in FIG. 3A, in this embodiment, the AC-AC converter 1a is a single-phase full-bridge AC-AC converter. The AC-AC converter 1a is configured to be electrically connected between an AC source 10 and an AC load 13, and includes a primary circuit 11, a resonant tank, a transformer TR, a secondary circuit 12, and a controller 2. The primary circuit 11 is electrically connected to the AC source 10 and includes four bidirectional switches forming a full-bridge configuration. Two bidirectional switches are electrically connected in series to form a first bridge arm, the other two bidirectional switches are electrically connected in series to form a second bridge arm, and the first and second bridge arms are electrically connected in parallel. The bidirectional switch can block voltage in two directions and conduct current in two directions, and the bidirectional switch is also known as a four-quadrant switch. In the present embodiment, the bidirectional switch, which is a four-quadrant switch, can substantially operate in all four quadrants in the voltage-current plane. In this embodiment, the bidirectional switch may be formed by two switches connected back-to-back. Specifically, in the first bridge arm, switches S1a and S1b are connected back-to-back to form a bidirectional switch, and switches S3a and S3b are connected back-to-back to form a bidirectional switch; in the second bridge arm, switches S2a and S2b are connected back-to-back to form a bidirectional switch, and switches S4a and S4b are connected back-to-back to form a bidirectional switch. It should be noted that FIG. 3A shows one possible implementation of the bidirectional switch and there are many other ways to realize it, namely the present disclosure is not limited thereto. For example, another possible implementation is to connect the source of switch S1a to the source of switch S1b rather than connecting the drain of switch S1a to the drain of switch S1b as shown. In an embodiment, the AC-AC converter 1a further includes an input filter 14 coupled between the AC source 10 and the primary circuit 11. The input filter 14 can be normally realized by any low-pass filter, such as a first-order LC low-pass filter.

The secondary circuit 12 is electrically connected to the AC load 13 and includes four bidirectional switches forming a full-bridge configuration. Two bidirectional switches are electrically connected in series to form a third bridge arm, the other two bidirectional switches are electrically connected in series to form a fourth bridge arm, and the third and fourth bridge arms are electrically connected in parallel. The bidirectional switch of the secondary circuit 12 can block voltage in two directions and conduct current in two directions, and the bidirectional switch is also known as a four-quadrant switch. In the embodiment, the bidirectional switch can operate in all four quadrants in the voltage-current plane. In this embodiment, each bidirectional switch of the secondary circuit 12 is formed by two switches connected back-to-back. Specifically, in the third bridge arm, switches Q1a and Q1b are connected back-to-back to form a bidirectional switch, and switches Q3a and Q3b are connected back-to-back to form a bidirectional switch; in the fourth bridge arm, switches Q2a and Q2b are connected back-to-back to form a bidirectional switch, and switches Q4a and Q4b are connected back-to-back to form a bidirectional switch. It should be noted that FIG. 3A shows one possible implementation of the bidirectional switch of the secondary circuit 12 and there are many other ways to realize it, namely the present disclosure is not limited thereto. For example, another possible implementation is to connect the source of switch Q1a to the source of switch Q1b rather than connecting the drain of switch Q1a to the drain of switch Q1b as shown. The controller 2 is configured to provide control signals to the bidirectional switches of the AC-AC converter 1a for controlling the switching operations. In the embodiment, the controller 2 is adapted to provide control signals to all the bidirectional switches (i.e., all the switches) of the AC-AC converter 1a for controlling the switching operations. In an embodiment, the AC-AC converter 1a further includes an output filter 15 coupled between the secondary circuit 12 and the AC load 13. The output filter 15 can be normally realized by any low-pass filter, such as a first-order LC low-pass filter.

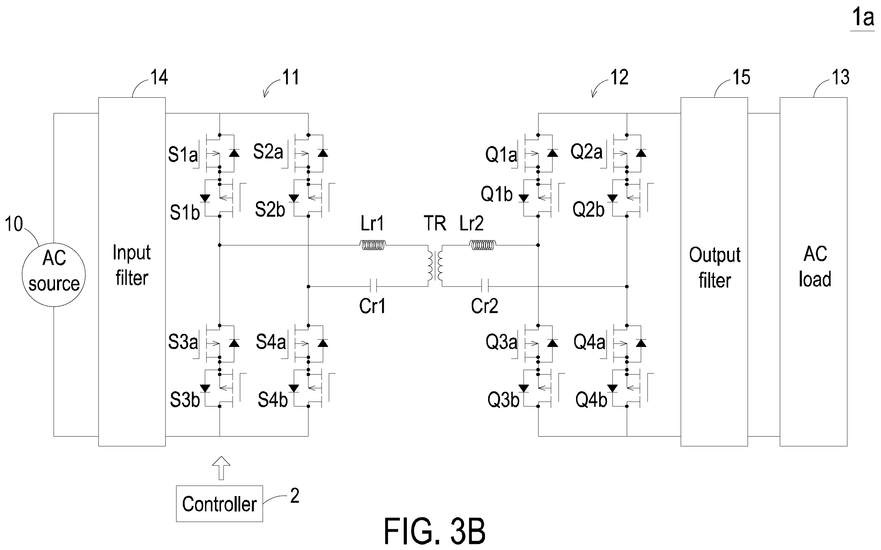

The resonant tank including at least one resonant inductor and at least one resonant capacitor is coupled between the primary circuit 11 and the secondary circuit 12. The transformer TR including a primary winding and a secondary winding is also coupled between the primary circuit 11 and the secondary circuit 12 to provide galvanic isolation. In the embodiment shown in FIG. 3A, the resonant tank includes a resonant inductor Lr1 and a resonant capacitor Cr1 at the primary side. The resonant inductor Lr1, the primary winding of transformer TR, and the resonant capacitor Cr1 are electrically connected in series between a connection node of the bidirectional switches in the first bridge arm of primary circuit 11 (i.e., the connection node of the switches S1b and S3a) and a connection node of the bidirectional switches in the second bridge arm of primary circuit 11 (i.e., the connection node of the switches S2b and S4a). In another embodiment, as shown in FIG. 3B, for bidirectional power flow, the resonant tank may further include a resonant inductor Lr2 and a resonant capacitor Cr2 at the secondary side to realize symmetrical operations. The resonant inductor Lr2, the secondary winding of transformer TR, and the resonant capacitor Cr2 are electrically connected in series between a connection node of the bidirectional switches in the third bridge arm of secondary circuit 12 (i.e., the connection node of the switches Q1b and Q3a) and a connection node of the bidirectional switches in the fourth bridge arm of secondary circuit 11 (i.e., the connection node of the switches Q2b and Q4a). Further, the resonant inductor Lr2 and the resonant capacitor Cr2 at the secondary side has substantially the same resonant frequency as the resonant inductor Lr1 and the resonant capacitor Cr1 at the primary side.

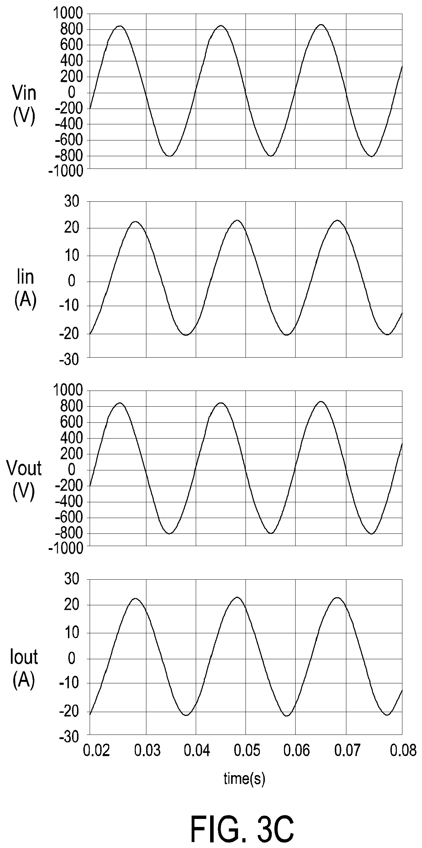

FIG. 3C schematically shows waveforms of an input voltage, an input current, an output voltage, and an output current of the AC-AC converter of FIG. 3A. In FIG. 3C, the input voltage Vin and the input current Iin are the voltage and current provided by the AC source 10, and the output voltage Vout and the output current Iout are the voltage and current provided to the AC load 13. As shown in FIG. 3C, both input voltage Vin and output voltage Vout are typical single-phase sinusoidal waveforms where they are identical in this case because the gain of the AC-AC converter is 1 and the turns ratio of transformer TR is 1. In any non-unity gain applications, the waveform of output voltage Vout will still follow the shape of the waveform of input voltage Vin with just amplitude difference. Similarly, the waveform of output current Iout also follows the waveform of input current Iin with the same phase and amplitude in this case. In addition, the proposed AC-AC converter 1a may operate at non-unity factor applications, where there exists a phase-shift angle between the input voltage Vin and the input current Iin, as shown in FIG. 3C. In other words, the AC-AC converter 1a can process both reactive power and real power at any power factor. Moreover, in the present embodiment(s), the total harmonic distortion (THD) of both the input current Iin and the output current Iout remains very low (<5%), meaning there can be no need for complicated control schemes in the proposed AC-AC converter 1a of the present embodiment whereas they are usually required in most power factor correction (PFC) converters.

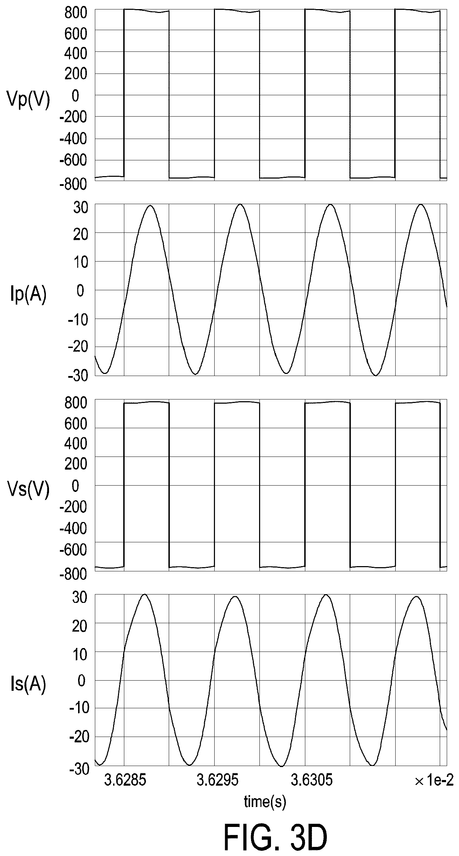

FIG. 3D schematically shows waveforms of a primary voltage, a primary current, a secondary voltage, and a secondary current of the AC-AC converter of FIG. 3A. In FIG. 3D, the primary voltage Vp and the primary current Ip are the voltage and current provided to the primary winding of transformer TR from the primary circuit 11, and the secondary voltage Vs and the secondary current Is are the voltage and current provided to the secondary circuit 12 from the secondary winding of transformer TR. As shown in FIG. 3D, the primary voltage Vp is a typical high-frequency square-shape waveform, and the primary current Ip is a typical sinusoidal wave when the AC-AC converter 1a operates at the resonant frequency. Similarly, the secondary voltage Vs is a typical high-frequency square-shape waveform, and the secondary current Is is a typical sinusoidal wave. It should be noted that the magnetizing current of the transformer TR is usually used to assist zero-voltage switching operations of the switches to reduce switching losses and improve system efficiency.

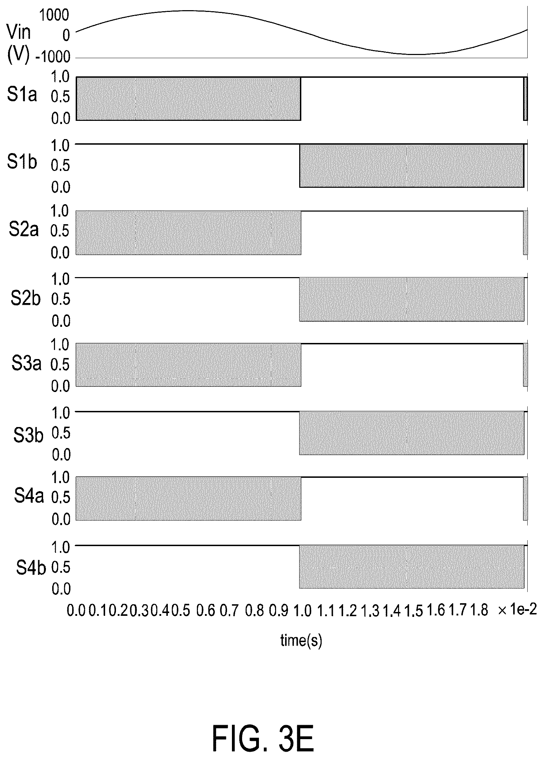

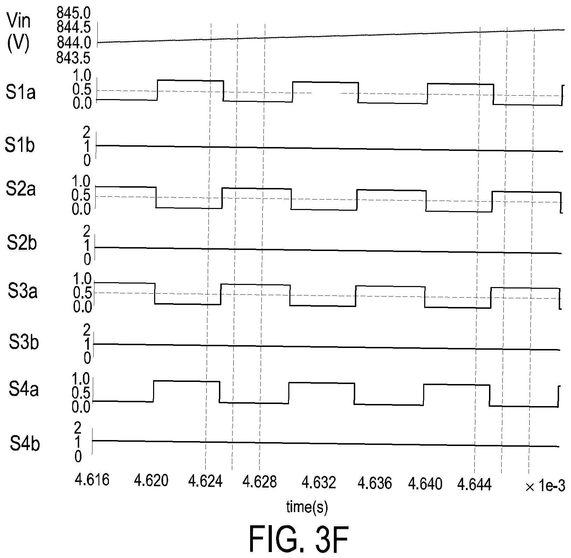

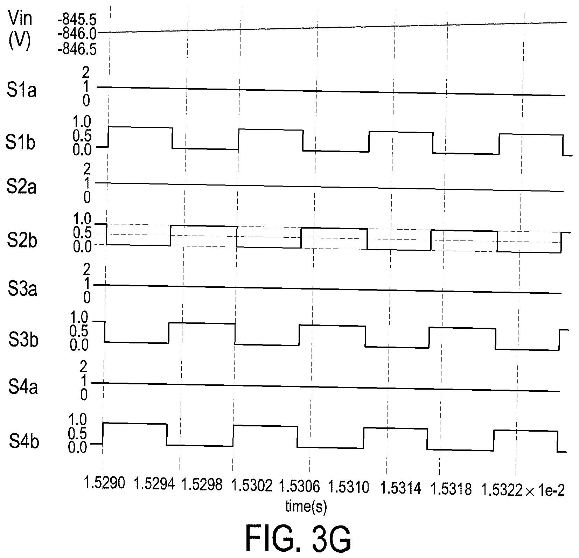

FIG. 3E schematically shows control signals of the switches of the primary circuit of FIG. 3A over a line cycle. FIG. 3F schematically shows control signals of the switches of the primary circuit of FIG. 3A when the input voltage is positive. FIG. 3G schematically shows control signals of the switches of the primary circuit of FIG. 3A when the input voltage is negative. In FIGS. 3E to 3G, S1a, S1b, S2a, S2b, S3a, S3b, S4a, and S4b represent the control signals of the switches S1a, S1b, S2a, S2b, S3a, S3b, S4a, and S4b respectively. As shown in FIG. 3E, when the input voltage Vin is positive, the switches S1b, S2b, S3b, and S4b are always turned on during this half-line cycle to reduce the conduction loss, and the control signals of switches S1a, S2a, S3a, and S4a are PWM signals. When the input voltage Vin is negative, the switches S1a, S2a, S3a, and S4a are always turned on during this half-line cycle to reduce the conduction loss, and the control signals of switches S1b, S2b, S3b, and S4b are PWM signals. For example, as shown in FIG. 3F, when the input voltage Vin is positive, the control signals of switches S1a, S2a, S3a, and S4a may be PWM signals with the duty cycle of 50%. Moreover, the control signal of switch S1a is complementary to the control signal of switch S3a, and the control signal of switch S2a is complementary to the control signal of switch S4a, and the control signals of switches S1a and S4a are the same. As shown in FIG. 3G, when the input voltage Vin is negative, the control signals of switches S1b, S2b, S3b, and S4b may be PWM signals with the duty cycle of 50%. Moreover, the control signal of switch S1b is complementary to the control signal of switch S3b, and the control signal of switch S2b is complementary to the control signal of switch S4b, and the control signals of switches S1b and S4b are the same. It should be noted that the control scheme shown here is only one feasible control method, and the application scope should not be limited to this control method only. Any control method can result in the waveform shown in FIG. 3C and FIG. 3D can be implemented in the proposed topology.

In most cases, the AC-AC converter 1a is preferred to operate at the resonant frequency to achieve the best efficiency. However, by adjusting the switching frequency, the magnitude of output voltage Vout can be well controlled, which is one of the major advantages of the proposed AC-AC converter 1a compared to the conventional line transformers. When the input voltage Vin varies, the output voltage Vout can be well-regulated rather than following the input voltage Vin in line transformers. A well-regulated AC output voltage Vout can bring a lot of benefits to the system, including but not limited to protecting the AC load 13 when the input voltage Vin suddenly increases, extending the lifetime of the AC load 13, providing required operational AC output voltage Vout when the input voltage Vin drops, etc. It should be noted that any other feasible control methods can be implemented in addition to the variable switching frequency control if they can effectively control the magnitude of output voltage Vout, such as PWM duty cycle control, phase-shift modulation control, etc.

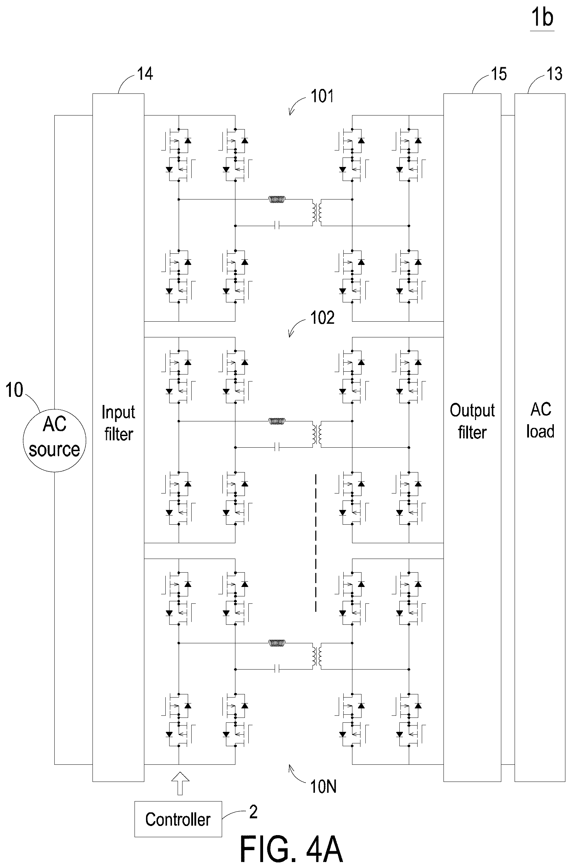

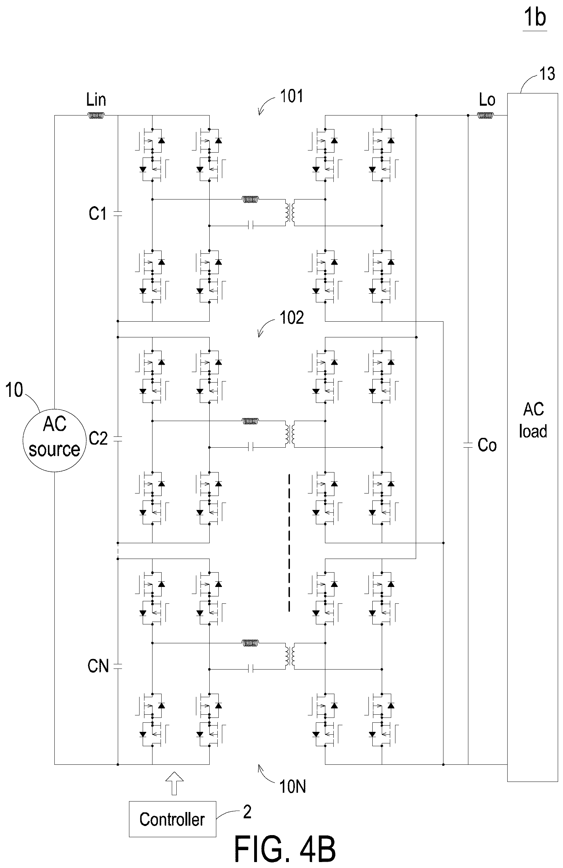

FIG. 4A illustrates a generalized AC-AC converter based on the AC-AC converter shown in FIG. 3A. In FIG. 4A, the component parts and elements corresponding to those of FIG. 3A are designated by identical numeral references, and detailed descriptions thereof are omitted herein. In the AC-AC converter 1a of FIG. 3A, the primary circuit 11, the resonant tank, the transformer TR, and the secondary circuit 12 may form a conversion module. As shown in FIG. 4A, the AC-AC converter 1b includes N conversion modules 101, 102, ..., 10N, where N is an integer greater than one. The inputs of the N conversion modules 101 to 10N (the inputs of the primary circuits of the N conversion modules 101 to 10N) may be electrically connected in series or parallel through the input filter 14. Similarly, the outputs of the N conversion modules 101 to 10N (the outputs of the secondary circuits of the N conversion modules 101 to 10N) may be electrically connected in series or parallel through the output filter 15. For example, in a step-down operation, where the AC-AC converter 1b may need to convert a high AC input voltage Vin to a low AC output voltage Vout, the inputs of the N conversion modules 101 to 10N are electrically connected in series to block high AC input voltage whereas the outputs of the N conversion modules 101 to 10N are electrically connected in parallel to provide high output current, as shown in FIG. 4B. In this embodiment, the input filter 14 includes an input inductor Lin and N input capacitors C1, C2, ..., CN, and the output filter 15 includes an output inductor Lo and an output capacitor Co. The N input capacitors C1 to CN are electrically connected in series and are respectively coupled to the inputs of N conversion modules 101 to 10N. The output of each of the N conversion modules 101 to 10N are coupled to the output inductor Co.

In practice, the resonant tank parameters may have mismatches due to the inevitable tolerance of the components. In this case, the power of one resonant tank may be different than that of the other resonant tanks, which may result in the voltages of the input capacitor C1 to CN being unbalanced. Adjusting the duty cycle of the switches and/or the switching frequency of the switches is an effective way to regulate the resonant tank power, thus regulating the voltage of input capacitor. Any other approaches that can adjust the resonant tank power can also be implemented.

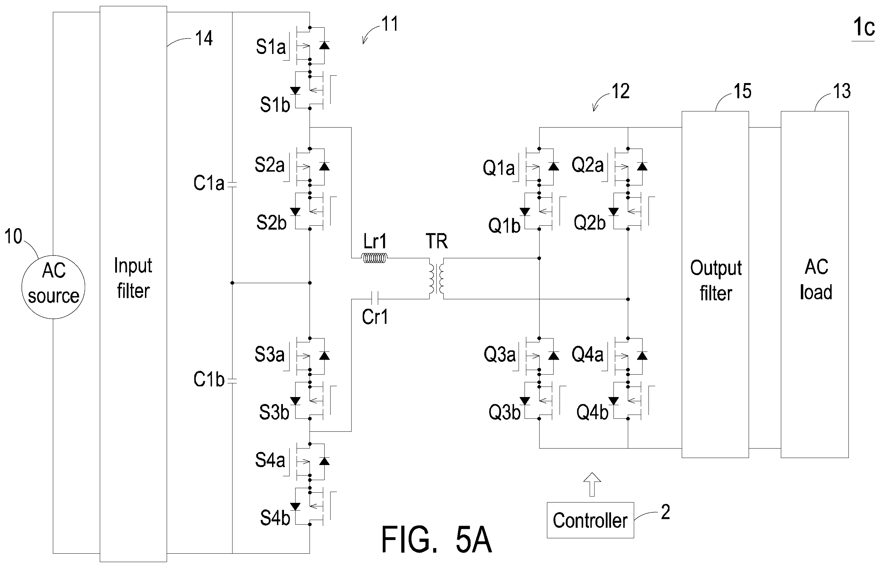

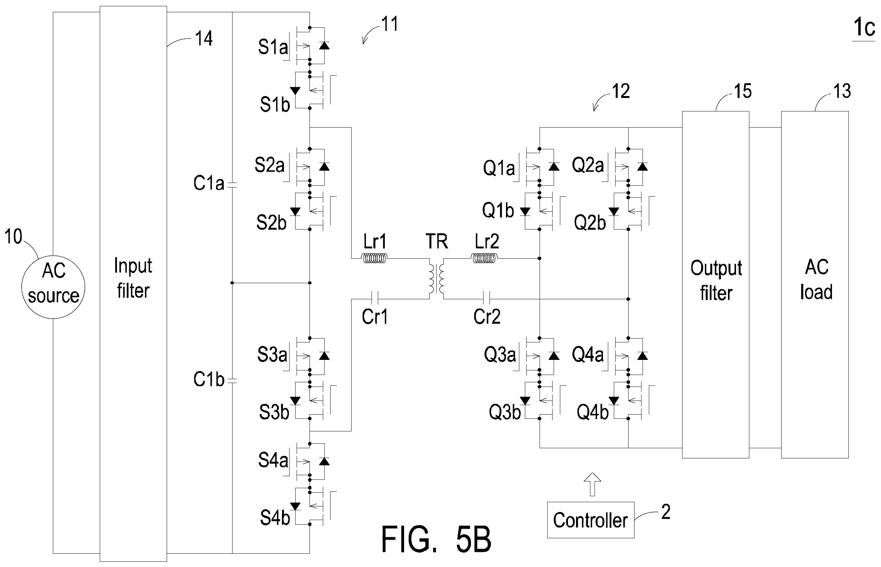

FIG. 5A illustrates a single-phase SHB-based (serial-half-bridge-based) AC-AC converter in accordance with an embodiment of the present disclosure. In FIG. 5A, the component parts and elements corresponding to those of FIG. 3A are designated by identical numeral references, and detailed descriptions thereof are omitted herein. As shown in FIG. 5A, in this embodiment, the AC-AC converter 1c is a single-phase SHB-based AC-AC converter. In the AC-AC converter 1c, the primary circuit 11 includes four bidirectional switches forming a SHB configuration. In the primary circuit 11, two bidirectional switches are electrically connected in series to form a first bridge arm, the other two bidirectional switches are electrically connected in series to form a second bridge arm, and the first and second bridge arms are electrically connected in series. In this embodiment, each bidirectional switch is formed by two switches connected back-to-back. Specifically, in the first bridge arm, switches S1a and S1b are connected back-to-back to form a bidirectional switch, and switches S2a and S2b are connected back-to-back to form a bidirectional switch; in the second bridge arm, switches S3a and S3b are connected back-to-back to form a bidirectional switch, and switches S4a and S4b are connected back-to-back to form a bidirectional switch. Further, the connection node of the first bridge arm (i.e., the connection node of the switches S1b and S2a) is connected to the resonant inductor Lr1, and the connection node of the second bridge arm (i.e., the connection node of the switches S3b and S4a) is connected to the resonant capacitor Cr1. In addition, the AC-AC converter 1a further includes a first input capacitor C1a and a second input capacitor C1b electrically connected in series. Further, the first input capacitor C1a is electrically connected in parallel to the first bridge arm of primary circuit 11, and the second input capacitor C1b is electrically connected in parallel to the second bridge arm of primary circuit 11. In the embodiment shown in FIG. 5A, the resonant tank includes the resonant inductor Lr1 and the resonant capacitor Cr1 at the primary side. In another embodiment, as shown in FIG. 5B, for bidirectional power flow, the resonant tank may further include the resonant inductor Lr2 and the resonant capacitor Cr2 at the secondary side to realize symmetrical operations. Further, the resonant inductor Lr2 and the resonant capacitor Cr2 at the secondary side has substantially the same resonant frequency as the resonant inductor Lr1 and the resonant capacitor Cr1 at the primary side.

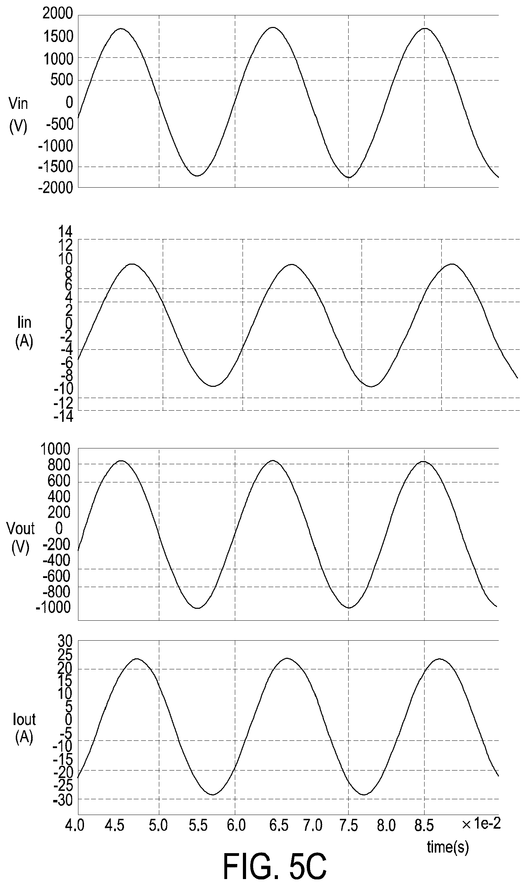

FIG. 5C schematically shows waveforms of the input voltage, the input current, the output voltage, and the output current of the AC-AC converter of FIG. 5A. As shown in FIG. 5C, both input voltage Vin and output voltage Vout are typical single-phase sinusoidal waveforms where the magnitude of output voltage Vout is only half of the magnitude of input voltage Vin even given that the turns ratio of transformer TR is 1, meaning that the gain of the AC-AC converter 1c is half compared with the AC-AC converter 1a shown in FIG. 3A. In other words, this topology inherently can provide a step-down function, which is more suitable for converting high-voltage AC to low-voltage AC applications, such as distribution in power systems. By adjusting the turns ratio of transformer TR, the gain of the AC-AC converter 1c can be further modified. Similarly, the waveform of output current Iout also follows the waveform of input current Iin with the same phase but doubled magnitude. In addition, the proposed AC-AC converter 1c may operate at non-unity factor applications, where there exists a phase-shift angle between the input voltage Vin and the input current Iin. In other words, the AC-AC converter 1c can process both reactive power and real power at any power factor. Moreover, the THD of both the input current Iin and the output current Iout remains very low (<5%), indicating that the proposed AC-AC converter 1a of the embodiment achieves this performance without the need for complex control strategies, which are typically required in most PFC converters.

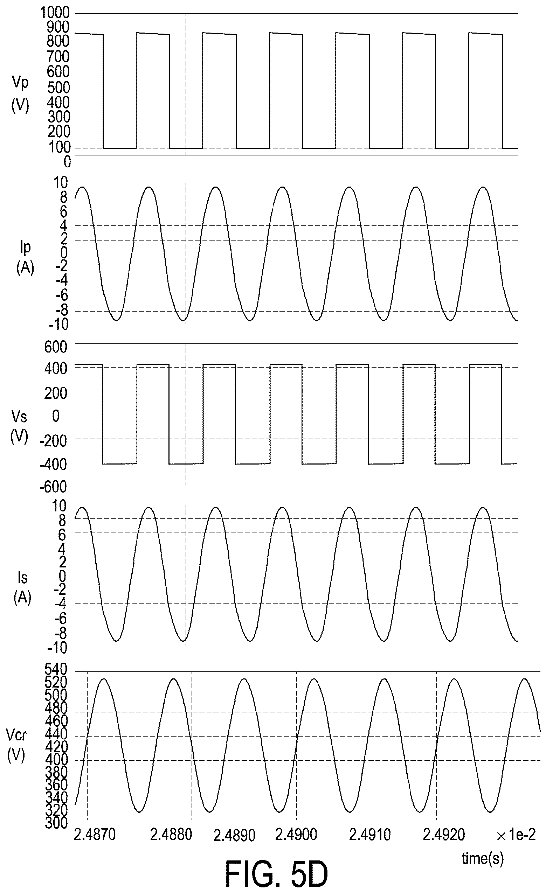

FIG. 5D schematically shows waveforms of the primary voltage, the primary current, the secondary voltage, the secondary current, and a resonant capacitor voltage of the AC-AC converter of FIG. 5A. In FIG. 5D, the resonant capacitor voltage Vcr is the voltage across the resonant capacitor Cr1. As shown in FIG. 5D, the primary voltage Vp is a typical high-frequency square-shape waveform with a DC offset, and the primary current Ip is a typical sinusoidal wave when the AC-AC converter 1c operates at the resonant frequency. Similarly, the secondary voltage Vs is a typical high-frequency square-shape waveform, and the secondary current Is is a typical sinusoidal wave. The resonant capacitor voltage Vcr also contains a DC offset, whose value is substantially equal to half of the input voltage Vin. It should be noted that the magnetizing current of the transformer TR is usually used to assist zero-voltage switching operations of the switches to reduce switching losses and improve system efficiency.

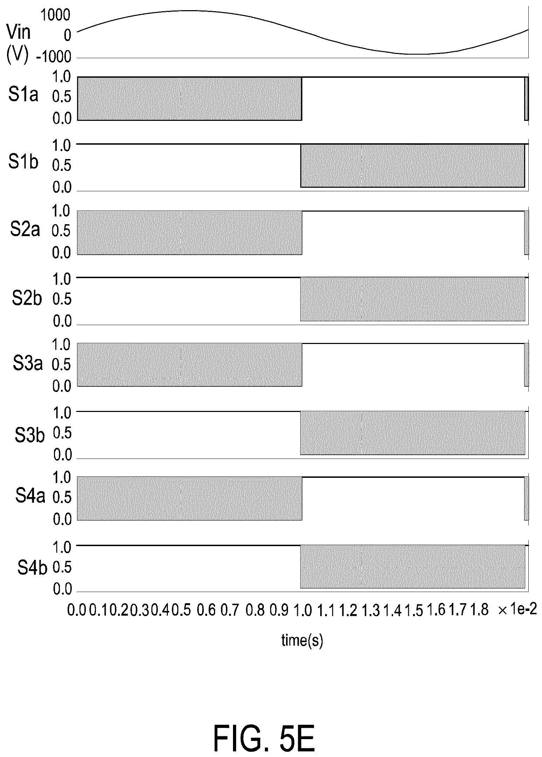

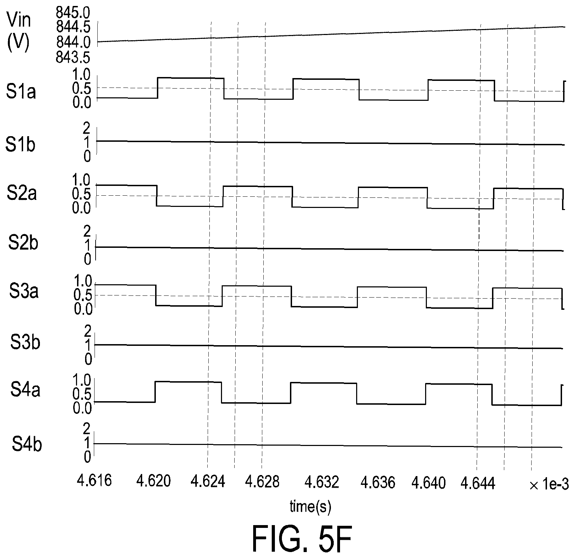

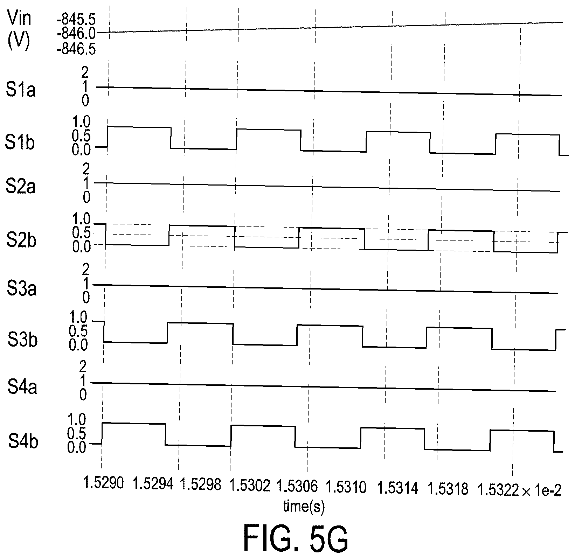

FIG. 5E schematically shows control signals of the switches of the primary circuit of FIG. 5A over a line cycle. FIG. 5F schematically shows control signals of the switches of the primary circuit of FIG. 5A when the input voltage is positive. FIG. 5G schematically shows control signals of the switches of the primary circuit of FIG. 5A when the input voltage is negative. As shown in FIG. 5E, when the input voltage Vin is positive, the switches S1b, S2b, S3b, and S4b are always turned on during this half-line cycle to reduce the conduction loss, and the control signals of switches S1a, S2a, S3a, and S4a are PWM signals. When the input voltage Vin is negative, the switches S1a, S2a, S3a, and S4a are always turned on during this half-line cycle to reduce the conduction loss, and the control signals of switches S1b, S2b, S3b, and S4b are PWM signals. For example, as shown in FIG. 5F, when the input voltage Vin is positive, the control signals of switches S1a, S2a, S3a, and S4a may be PWM signals with the duty cycle of 50%. Moreover, the control signal of switch S1a is complementary to the control signal of switch S3a, and the control signal of switch S2a is complementary to the control signal of switch S4a, and the control signals of switches S1a and S4a are the same. As shown in FIG. 5G, when the input voltage Vin is negative, the control signals of switches S1b, S2b, S3b, and S4b may be PWM signals with the duty cycle of 50%. Moreover, the control signal of switch S1b is complementary to the control signal of switch S3b, and the control signal of switch S2b is complementary to the control signal of switch S4b, and the control signals of switches S1b and S4b are the same. It should be noted that the control scheme shown here is only one feasible control method, and the application scope should not be limited to this control method only. Any control method can result in the waveform shown in FIG. 5C and FIG. 5D can be implemented in the proposed topology.

In most cases, the AC-AC converter 1c is preferred to operate at the resonant frequency to achieve the best efficiency. However, by adjusting the switching frequency, the magnitude of output voltage Vout can be well controlled, which is one of the major advantages of the proposed AC-AC converter 1c compared to the conventional line transformers. When the input voltage Vin varies, the output voltage Vout can be well-regulated rather than following the input voltage Vin in line transformers. A well-regulated AC output voltage Vout can bring a lot of benefits to the system, including but not limited to protecting the AC load 13 when the input voltage Vin suddenly increases, extending the lifetime of the AC load 13, providing required operational AC output voltage Vout when the input voltage Vin drops, etc. It should be noted that any other feasible control methods can be implemented in addition to the variable switching frequency control if they can effectively control the magnitude of output voltage Vout, such as PWM duty cycle control, phase-shift modulation control, etc.

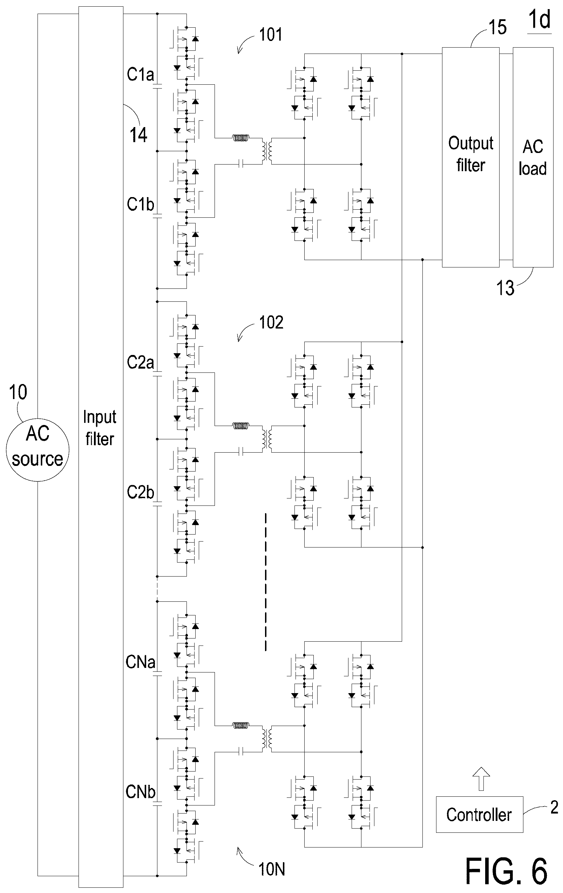

FIG. 6 illustrates a generalized AC-AC converter based on the AC-AC converter shown in FIG. 5A. In FIG. 6, the component parts and elements corresponding to those of FIG. 5A are designated by identical numeral references, and detailed descriptions thereof are omitted herein. In the AC-AC converter 1c of FIG. 5A, the primary circuit 11, the resonant tank, the transformer TR, and the secondary circuit 12 may form a conversion module. As shown in FIG. 6, the AC-AC converter 1d includes N conversion modules 101, 102, ..., 10N, where N is an integer greater than one. The inputs of the N conversion modules 101 to 10N (the inputs of the primary circuits of the N conversion modules 101 to 10N) may be electrically connected in series or parallel through the input filter 14. Similarly, the outputs of the N conversion modules 101 to 10N (the outputs of the secondary circuits of the N conversion modules 101 to 10N) may be electrically connected in series or parallel through the output filter 15. For example, in a step-down operation, where the AC-AC converter 1d may need to convert a high AC input voltage Vin to a low AC output voltage Vout, the inputs of the N conversion modules 101 to 10N are electrically connected in series to block high AC input voltage whereas the outputs of the N conversion modules 101 to 10N are electrically connected in parallel to provide high output current, as shown in FIG. 6. Additionally, in this embodiment, the AC-AC converter 1d includes N first input capacitors C1a, C2a, ..., CNa and N second input capacitors C1b, C2b, ..., CNb. The N first input capacitors C1a to CNa are respectively connected in parallel to the first bridge arms of the primary circuits of the N conversion modules 101 to 10N, and the N second input capacitors C1b to CNb are respectively connected in parallel to the second bridge arms of the primary circuits of the N conversion modules 101 to 10N. Further, the first input capacitor C1a, the second input capacitor C1b, the first input capacitor C1b, the second input capacitor C2b, ..., the first input capacitor CNa, and the second input capacitor CNb are electrically connected in series sequentially.

In practice, the resonant tank parameters may have mismatches due to the inevitable tolerance of the components. In this case, the power of one resonant tank may be different than that of the other resonant tanks, which may result in the voltages of the input capacitors being unbalanced. Adjusting the duty cycle of the switches and/or the switching frequency of the switches is an effective way to regulate the resonant tank power, thus regulating the voltage of input capacitors. Any other approaches that can adjust the resonant tank power can also be implemented.

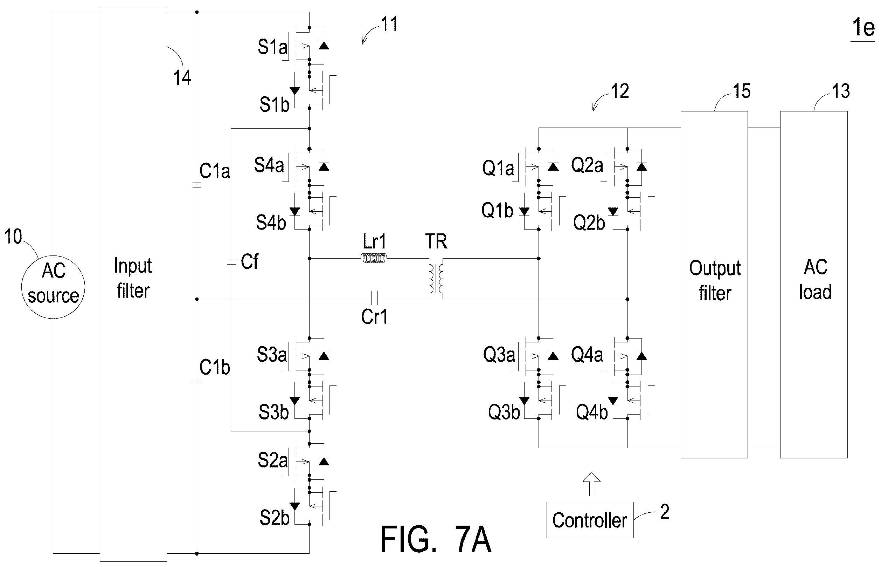

FIG. 7A illustrates a single-phase flying-capacitor AC-AC converter in accordance with an embodiment of the present disclosure. In FIG. 7A, the component parts and elements corresponding to those of FIG. 3A are designated by identical numeral references, and detailed descriptions thereof are omitted herein. As shown in FIG. 7A, in this embodiment, the AC-AC converter 1e is a single-phase flying-capacitor AC-AC converter. In the AC-AC converter 1e, the primary circuit 11 includes four bidirectional switches forming a flying-capacitor configuration. In the primary circuit 11, two bidirectional switches are electrically connected in series to form a first bridge arm, the other two bidirectional switches are electrically connected in series to form a second bridge arm, and the first and second bridge arms are electrically connected in series. In this embodiment, each bidirectional switch is formed by two switches connected back-to-back. Specifically, in the first bridge arm, switches S1a and S1b are connected back-to-back to form a bidirectional switch, and switches S4a and S4b are connected back-to-back to form a bidirectional switch; in the second bridge arm, switches S3a and S3b are connected back-to-back to form a bidirectional switch, and switches S2a and S2b are connected back-to-back to form a bidirectional switch. Moreover, the primary circuit 11 further includes a flying capacitor Cf, a first terminal of the flying capacitor Cf is coupled to the connection node of the first bridge arm (i.e., the connection node of the switches S1b and S4a), and a second terminal of the flying capacitor Cf is coupled to the connection node of the second bridge arm (i.e., the connection node of the switches S3b and S2a). In addition, the AC-AC converter 1a further includes a first input capacitor C1a and a second input capacitor C1b electrically connected in series. Further, the capacitor branch, formed by the first input capacitor C1a and the second input capacitor C1b connected in series, is electrically connected in parallel to the switch branch, formed by the first and second bridge arms of the primary circuit 11 connected in series. Additionally, the connection node of the first and second bridge arms of the primary circuit 11 (i.e., the connection node of the switches S4b and S3a) is connected to the resonant inductor Lr1, and the connection node of the first input capacitor C1a and the second input capacitor C1b is connected to the resonant capacitor Cr1.

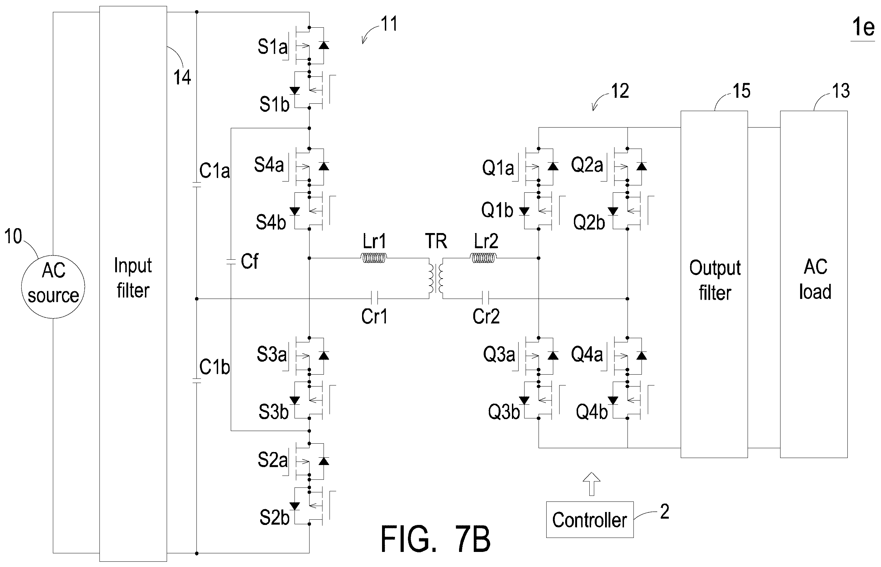

In the embodiment shown in FIG. 7A, the resonant tank includes the resonant inductor Lr1 and the resonant capacitor Cr1 at the primary side. In another embodiment, as shown in FIG. 7B, for bidirectional power flow, the resonant tank may further include the resonant inductor Lr2 and the resonant capacitor Cr2 at the secondary side to realize symmetrical operations. Further, the resonant inductor Lr2 and the resonant capacitor Cr2 at the secondary side has substantially the same resonant frequency as the resonant inductor Lr1 and the resonant capacitor Cr1 at the primary side.

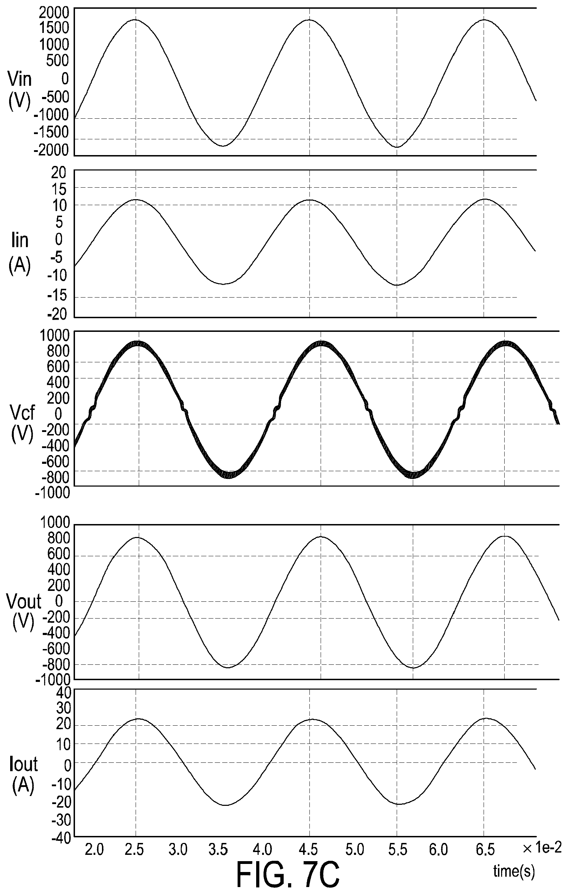

FIG. 7C schematically shows waveforms of the input voltage, the input current, a flying capacitor voltage, the output voltage, and the output current of the AC-AC converter of FIG. 7A. In FIG. 7C, the flying capacitor voltage Vcf is the voltage across the flying capacitor Cf. As shown in FIG. 7C, both input voltage Vin and output voltage Vout are typical single-phase sinusoidal waveforms where the magnitude of output voltage Vout is only half of the magnitude of input voltage Vin even if the turns ratio of transformer TR is 1, meaning that the gain of the AC-AC converter 1e is half compared with the AC-AC converter 1a shown in FIG. 3A. In other words, this topology inherently can provide a step-down function, which is more suitable for converting high-voltage AC to low-voltage AC applications, such as distribution in power systems. By adjusting the turns ratio of transformer TR, the gain of the AC-AC converter 1e can be further modified. Similarly, the waveform of output current Iout also follows the waveform of input current Iin with the same phase but doubled magnitude. The flying capacitor voltage Vcf also follows the input voltage Vin and its value is always substantially half of the input voltage Vin. In addition, the proposed AC-AC converter 1e may operate at non-unity factor applications, where there exists a phase-shift angle between the input voltage Vin and the input current Iin. In other words, the AC-AC converter 1e can process both reactive power and real power at any power factor. Furthermore, in the embodiment, the THD of both the input current Iin and the output current Iout remains very low (<5%) with no extra effort, meaning there can be no need for complicated control schemes in the proposed AC-AC converter 1e of the embodiment whereas they are necessary for most PFC converters.

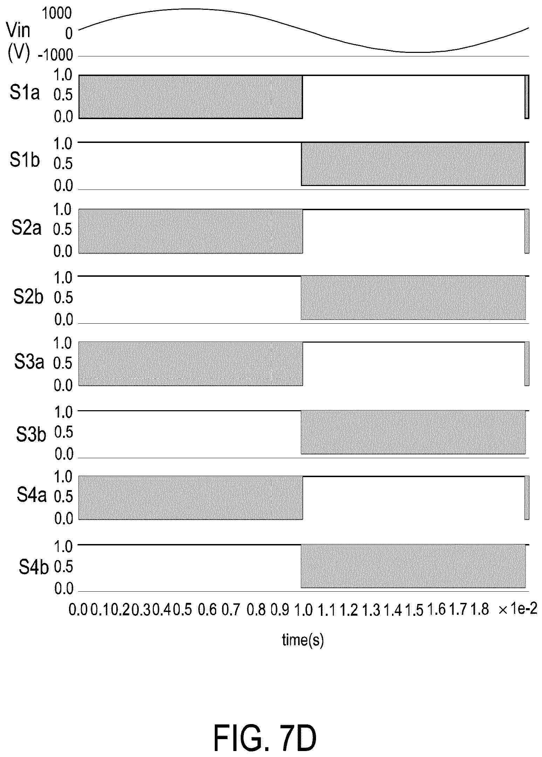

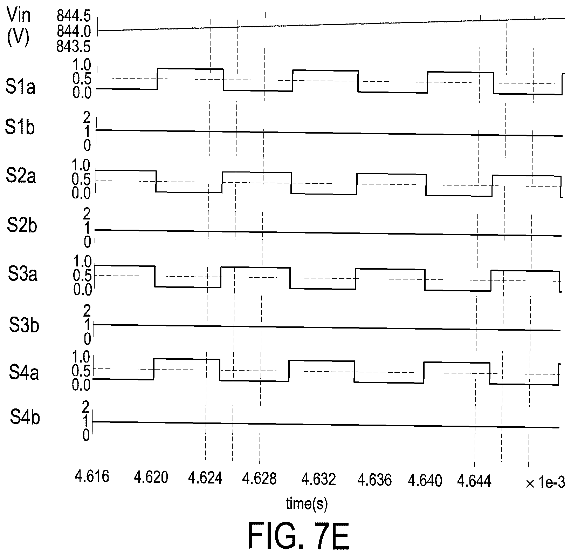

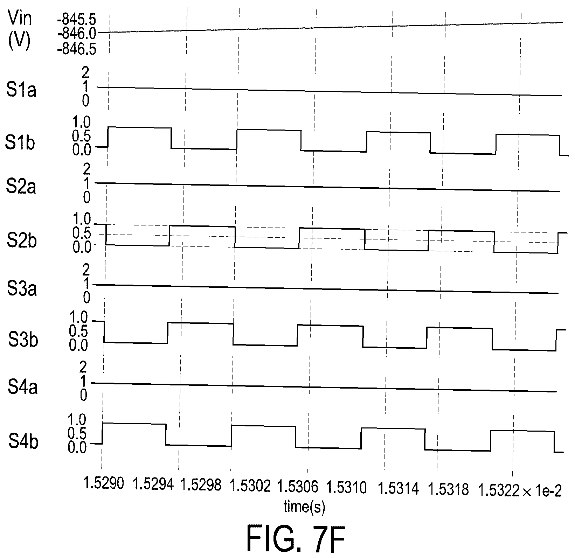

FIG. 7D schematically shows control signals of the switches of the primary circuit of FIG. 7A over a line cycle. FIG. 7E schematically shows control signals of the switches of the primary circuit of FIG. 7A when the input voltage is positive. FIG. 7F schematically shows control signals of the switches of the primary circuit of FIG. 7A when the input voltage is negative. As shown in FIG. 7D, when the input voltage Vin is positive, the switches S1b, S2b, S3b, and S4b are always turned on during this half-line cycle to reduce the conduction loss, and the control signals of switches S1a, S2a, S3a, and S4a are PWM signals. When the input voltage Vin is negative, the switches S1a, S2a, S3a, and S4a are always turned on during this half-line cycle to reduce the conduction loss, and the control signals of switches S1b, S2b, S3b, and S4b are PWM signals. For example, as shown in FIG. 7E, when the input voltage Vin is positive, the control signals of switches S1a, S2a, S3a, and S4a may be PWM signals with the duty cycle of 50%. Moreover, the control signal of switch S1a is complementary to the control signal of switch S3a, and the control signal of switch S2a is complementary to the control signal of switch S4a, and the control signals of switches S1a and S4a are the same. As shown in FIG. 7F, when the input voltage Vin is negative, the control signals of switches S1b, S2b, S3b, and S4b may be PWM signals with the duty cycle of 50%. Moreover, the control signal of switch S1b is complementary to the control signal of switch S3b, and the control signal of switch S2b is complementary to the control signal of switch S4b, and the control signals of switches S1b and S4b are the same. It should be noted that the control scheme shown here is only one feasible control method, and the application scope should not be limited to this control method only. Any control method can result in the waveform shown in FIG. 7C can be implemented in the proposed topology.

In most cases, the AC-AC converter 1e is preferred to operate at the resonant frequency to achieve the best efficiency. However, by adjusting the switching frequency, the magnitude of output voltage Vout can be well controlled, which is one of the major advantages of the proposed AC-AC converter 1e compared to the conventional line transformers. When the input voltage Vin varies, the output voltage Vout can be well-regulated rather than following the input voltage Vin in line transformers. A well-regulated AC output voltage Vout can bring a lot of benefits to the system, including but not limited to protecting the AC load 13 when the input voltage Vin suddenly increases, extending the lifetime of the AC load 13, providing required operational AC output voltage Vout when the input voltage Vin drops, etc. It should be noted that any other feasible control methods can be implemented in addition to the variable switching frequency control if they can effectively control the magnitude of output voltage Vout, such as PWM duty cycle control, phase-shift modulation control, etc.

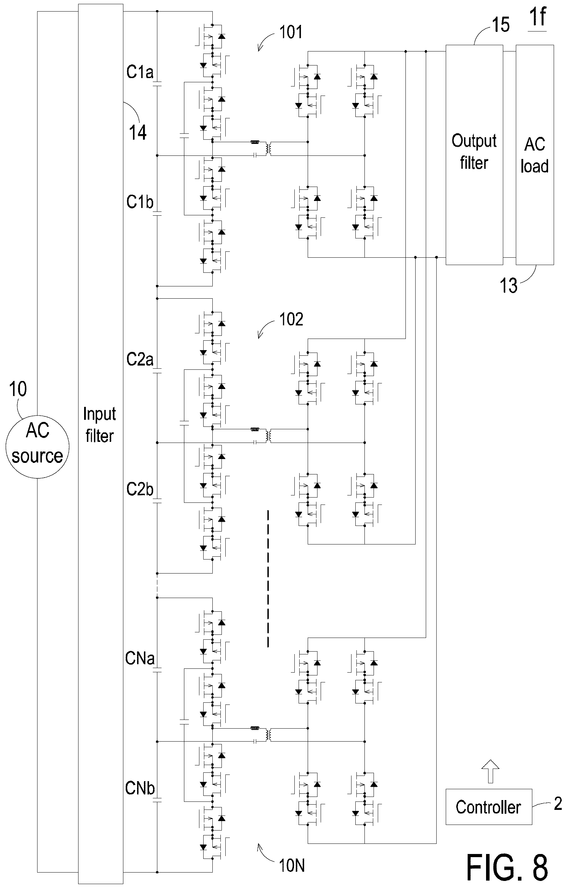

FIG. 8 illustrates a generalized AC-AC converter based on the AC-AC converter shown in FIG. 7A. In FIG. 8, the component parts and elements corresponding to those of FIG. 7A are designated by identical numeral references, and detailed descriptions thereof are omitted herein. In the AC-AC converter 1e of FIG. 7A, the primary circuit 11, the resonant tank, the transformer TR, and the secondary circuit 12 may form a conversion module. As shown in FIG. 8, the AC-AC converter 1f includes N conversion modules 101, 102, ..., 10N, where N is an integer greater than one. Further, the AC-AC converter 1f includes N first input capacitors C1a, C2a, ..., CNa and N second input capacitors C1b, C2b, ..., CNb. Similar to the topology shown in FIG. 7A, the first input capacitor C2a and the second input capacitor C2b are electrically connected in series to form a capacitor branch, which is electrically connected in parallel to the switch branch of the primary circuit 11 of the corresponding conversion module 102. Likewise, the first input capacitor CNa and the second input capacitor CNb are electrically connected in series to form a capacitor branch, which is electrically connected in parallel to the switch branch of the primary circuit 11 of the corresponding conversion module 10N. The N capacitor branches may be electrically connected in series or parallel through the input filter 14. The outputs of the N conversion modules 101 to 10N (the outputs of the secondary circuits of the N conversion modules 101 to 10N) may be electrically connected in series or parallel through the output filter 15. For example, in a step-down operation, where the AC-AC converter 1f may need to convert a high AC input voltage Vin to a low AC output voltage Vout, the N capacitor branches are electrically connected in series to block high AC input voltage whereas the outputs of the N conversion modules 101 to 10N are electrically connected in parallel to provide high output current, as shown in FIG. 8.

In practice, the resonant tank parameters may have mismatches due to the inevitable tolerance of the components. In this case, the power of one resonant tank may be different than that of the other resonant tanks, which may result in the voltages of the input capacitors being unbalanced. Adjusting the duty cycle of the switches and/or the switching frequency of the switches is an effective way to regulate the resonant tank power, thus regulating the voltage of input capacitors. Any other approaches that can adjust the resonant tank power can also be implemented.

In the above embodiments, the secondary circuit 12 adopts full-bridge configuration. However, the present disclosure is not limited thereto. For example, depending on actual requirements, the secondary circuit 12 may adopt the SHB configuration (i.e., the topology of the primary circuit 11 shown in FIG. 5A), the flying-capacitor configuration (i.e., the topology of the primary circuit 11 shown in FIG. 7A), or any other suitable topology.

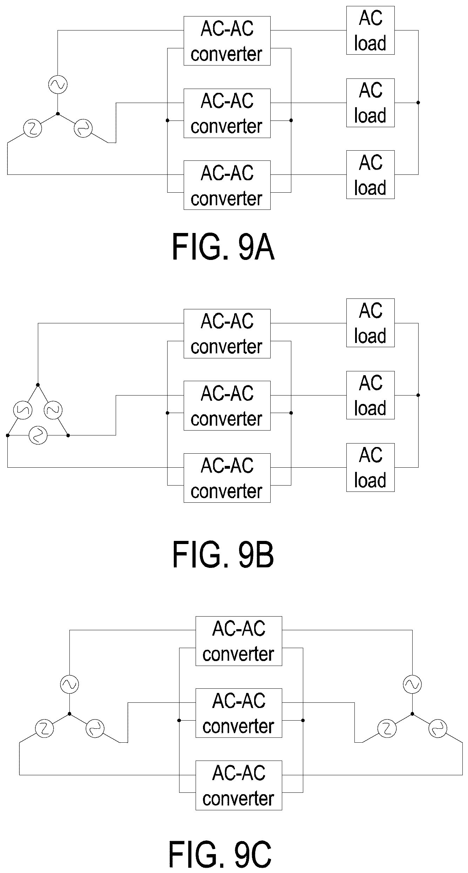

FIG. 9A illustrates a three-phase system in accordance with an embodiment of the present disclosure. As shown in FIG. 9A, the three-phase system includes a three-phase AC source, three AC-AC converters, and three AC loads. The three-phase AC source provides a three-phase AC input and includes three AC sources connected in star configuration. The first input terminal of each AC-AC converter is connected to the three-phase AC source (e.g., the corresponding AC source), and the second input terminals of the three AC-AC converters are connected to a common node. The first output terminal of each AC-AC converter is connected to the corresponding AC load, and the second output terminals of the three AC-AC converters are connected to another common node. In addition, the AC-AC converter in this three-phase system may be implemented by any AC-AC converter proposed in the above embodiment, which depends on the system requirements, such as input voltage, output voltage, power level, etc.

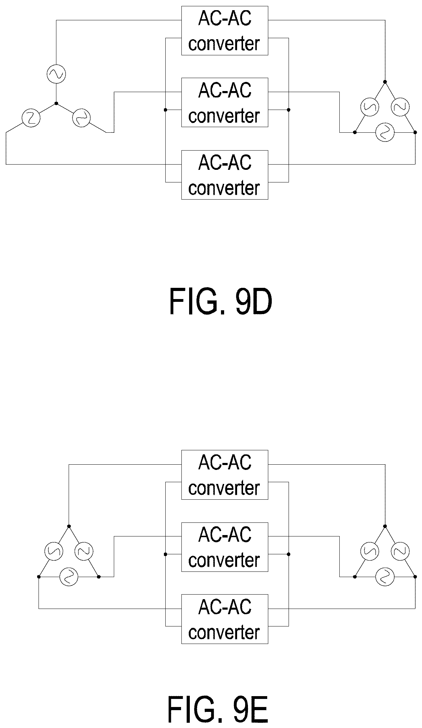

In addition, the three-phase system may have a lot of variants. For example, the three AC sources of the three-phase AC source may be connected in delta configuration, as shown in FIG. 9B. In another embodiment, the AC-AC converters may be connected between two three-phase AC sources, and the three AC sources of each three-phase AC source may be connected in star or delta configuration, as shown in FIGS. 9C, 9D, and 9E. It should be noted that there are many other ways to interface different loads and sources in a three-phase system, and the present disclosure is not limited to the examples shown.

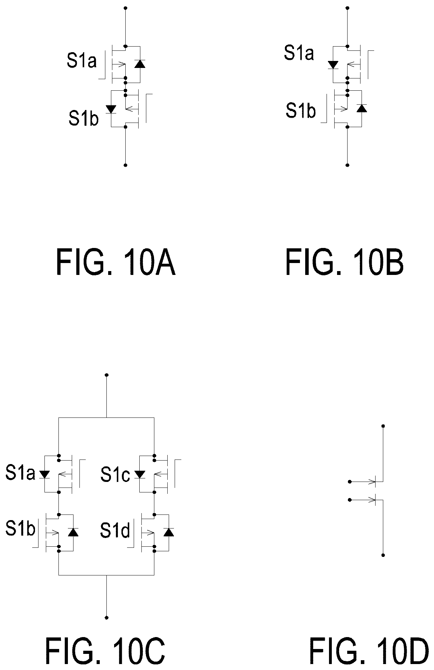

FIGS. 10A, 10B, 10C, and 10D schematically show four common ways to realize a bidirectional switch. In the implementations of FIG. 10A and FIG. 10B, two standalone MOSFETs (metal-oxide-semiconductor field-effect transistor) connected either drain to drain or source to source are utilized to form a bidirectional switch, where the implementation in FIG. 10A is applied to the above embodiments as an example. One major drawback of the implementations in FIG. 10A and FIG. 10B is that the on-state resistance of the bidirectional switch is twice of the standalone MOSFET, which may increase the conduction loss. In the implementation of FIG. 10C, another bidirectional switch is added in parallel to the existing bidirectional switch. In specific, the bidirectional switch formed by the switches S1a and S1b connected back-to-back is connected in parallel to the bidirectional switch formed by the switches S1c and S1d connected back-to-back, and the bidirectional switch mentioned in the above embodiments is replaced by this implementation. Accordingly, the total on-state resistance remains the same as a single standalone switch. FIG. 10D shows a dual-gate single-drift-region monolith bidirectional switch with an on-state resistance the same as a single switch and only a minor if not an increase in the chip area. By using the monolith bidirectional switch, the overall performance, such as efficiency and power density, of the proposed AC-AC converter will outperform the state-of-the-art AC-AC converters.

One challenge of implementing bidirectional switches in AC-AC converters is the control strategy or the gating strategy for the switches. When controlling the unidirectional switches, a deadtime is usually introduced between the complementary switches to avoid short circuits. However, this simple strategy is unlikely to be used the same way for bidirectional switches.

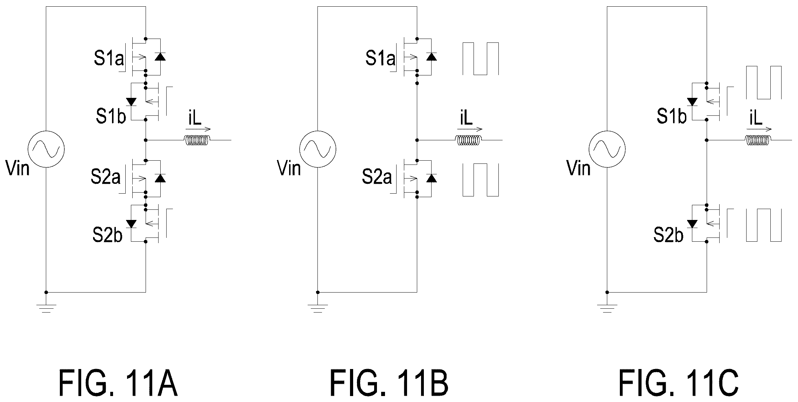

FIGS. 11A, 11B, and 11C schematically show a basic half-bridge circuit based on two bidirectional switches (i.e., a bridge arm formed by two bidirectional switches), formed by switches S1a, S1b, S2a, and S2b, with an inductive load, and iL represents the load current flowing through the inductive load. When the input voltage Vin is positive, one good control strategy is to keep the switches S1b and S2b constantly in on-state. By doing this, the half-bridge circuit effectively becomes a basic unidirectional half-bridge circuit shown in FIG. 11B. By controlling the remaining two switches S1a and S2a with complementary gate signals with necessary deadtime, ZVS is realized for both switches, giving the load current iL is capable of providing necessary energy to charge and discharge the output capacitors of the said switches. In summary, when the input voltage Vin is positive, the switches S1b and S2b can operate with zero or near-zero switching loss but have conduction loss, while the switches S1a and S2a have both switching loss and minimized conduction loss through the switch channel.

Similarly, when the input voltage Vin is negative, one good control strategy is to keep the switches S1a and S2a constantly in on-state. By doing this, the half-bridge circuit effectively becomes a basic unidirectional half-bridge circuit shown in FIG. 11C. By controlling the remaining two switches S1b and S2b with complementary gate signals with necessary deadtime, ZVS is realized for both switches, giving the load current iL is capable of providing necessary energy to charge and discharge the output capacitors of the said switches. In summary, when the input voltage Vin is negative, the switches S1a and S2a can operate with zero or near-zero switching loss but have conduction loss, while the switches S1b and S2b have both switching loss and minimized conduction loss through the switch channel. This control method may be applied to any of the AC-AC converters shown in above embodiments and is performed by the controller 2. Accordingly, the input voltage Vin used to determine the control signals of switches is sensed by the controller 2 through any suitable sensing circuit. For example, when the control method is applied to the primary circuit 11 of the AC-AC converter 1a shown in FIG. 3A, the said load current iL is regarded as the primary current Ip of the primary circuit 11.

To implement the proposed control method, the voltage sensing of the input voltage Vin is so critical that if there is any error from the sensing circuit, the proposed control method may not be able to provide the expected performance. For example, if the sensed input voltage is positive but the real input voltage is negative, an unexpected short circuit could happen if the proposed control method is applied. Therefore, a protective control method is proposed and applied when the input voltage Vin transits from positive to negative or from negative to positive to avoid such a short circuit scenario. The protective control method would be described based on the half-bridge circuit shown in FIG. 11A. It is noted that the protective control method can also be applied to the full-bridge configuration, the SHB configuration, and the flying-capacitor configuration of bidirectional switches shown in above embodiments.

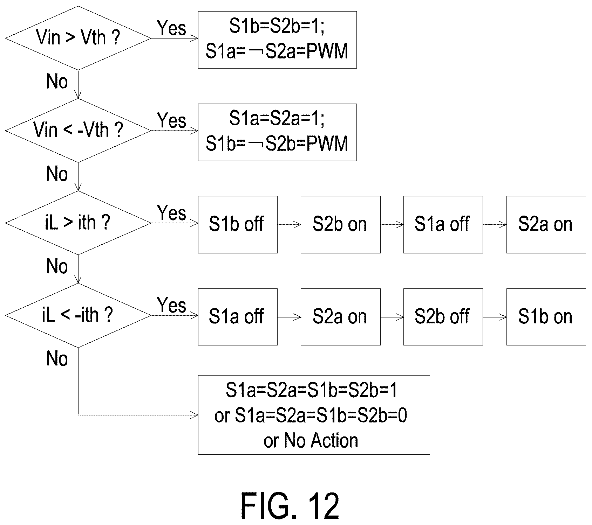

When the absolute value of sensed input voltage Vin is smaller than a threshold, the protective control method is triggered, where one or several actions can be taken, including but not limited to reducing the gate-source voltage to increase the on-state resistance to suppress the short circuit current, turn-off one of switches S1b and S2b based on the direction of load current iL before the commutation between switches S1a and S2a, or turning on switches S1a, S1b, S2a, and S2b to intentionally create a short circuit for a small period, etc. FIG. 12 shows one example of the proposed control method considering sensing mismatch of both input voltage Vin and load current iL. This control method is also performed by the controller 2. As shown in FIG. 12, when the sensed input voltage Vin is greater than a predefined threshold voltage Vth, which means the voltage direction is positive even considering sensing mismatch, the switches S1b and S2b are in on-state whereas the switches S1a and S2a have complementary PWM control signals with necessary deadtime. When the sensed input voltage Vin is smaller than the additive inverse of the predefined threshold voltage Vth, which means the voltage direction is negative even considering sensing mismatch, the switches S1a and S2a are in on-state whereas the switches S1b and S2b have complementary PWM control signals with necessary deadtime. When the sensed input voltage Vin is close to zero, which means the actual input voltage Vin can either be positive or negative, the direction of load current iL will start to determine the commutation approach. Namely, when the sensed load current iL is greater than a predefined threshold current ith, which means the current direction is positive even considering sensing mismatch, the control process is sequentially turning off switch S1b, turning on switch S2b, turning off switch S1a, and turning on switch S2a. When the sensed load current iL is smaller than the additive inverse of the predefined threshold current ith, which means the current direction is negative even considering sensing mismatch, the control process is sequentially turning off switch S1a, turning on switch S2a, turning off switch S2b, and turning on switch S1b. Lastly, if both the input voltage Vin and load current iL are close to zero with difficulty in obtaining their directions, all switches may be turned on to create a temporary short circuit to avoid any unexpected behaviors, or all switches may be turned off to wait for the next command. Another approach is to keep the previous state of the switches with no further action. It should be noted that the process shown in FIG. 12 is just one possible example of the proposed control method, and the present disclosure is not limited thereto. The sequence of determination steps can be adjusted according to actual requirements. One more example is to first determine the current direction and then determine the voltage direction once the load current iL is close to zero. More importantly, the implementation of the proposed control method is not limited to the implementation of the bidirectional switches shown in FIG. 11A, and the control method can also be applied to any circuit formed by bidirectional switches shown in above embodiments. The control method is also feasible to any other implementation of bidirectional switch shown in FIGS. 10B, 10C, and 10D.

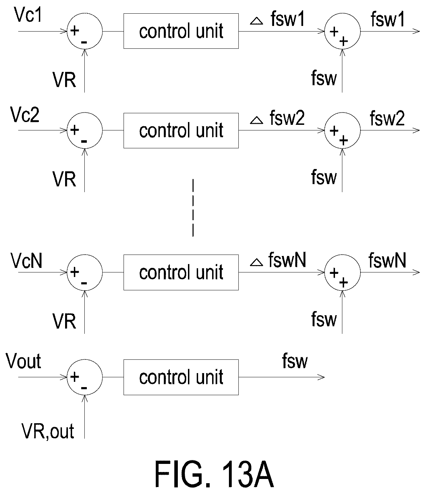

Various approaches are possible to balance the input capacitor voltages for different stacking structures of primary circuits 11. The first one is to adjust the switching frequency of the control signals of the switches. FIG. 13A illustrates a voltage balancing method based on the switching frequency control for the AC-AC converter 1b in FIG. 4B, in accordance with an embodiment of the present disclosure. This voltage balancing method is performed by the controller 2. In this voltage balancing method, the capacitor voltages Vc1, Vc2, ..., VcN of the N input capacitors C1, C2, ..., CN are sensed and respectively compared with a reference voltage VR. The difference is processed by a dedicated control unit of the controller 2 to calculate the switching frequency difference, and the final switching frequency is determined by the sum of the switching frequency difference and a common switching frequency fsw. The common switching frequency fsw is calculated by another control unit of the controller 2, which takes the difference between the sensed output voltage Vout and the output voltage reference VR,out, and generates the common switching frequency fsw according to the difference. Taking the conversion module 101 and the corresponding input capacitor C1 as an example, the capacitor voltage Vc1 of the input capacitor C1 is sensed and compared with the reference voltage VR to generate a difference, and the difference is processed by the control unit to calculate the switching frequency difference Δfsw1. Then, the final switching frequency fsw1 is determined by the sum of the switching frequency difference Δfsw1 and the common switching frequency fsw, and the controller 2 controls the switches in PWM operation of the conversion module 101 to operate with the final switching frequency fsw1.

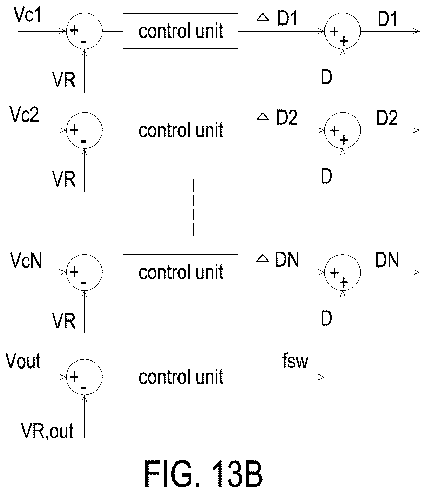

Another approach is to adjust the duty cycle of the control signals of the switches while keeping the switching frequency the same. FIG. 13B illustrates a voltage balancing method based on the duty cycle control for the AC-AC converter 1b in FIG. 4B, in accordance with an embodiment of the present disclosure. This voltage balancing method is performed by the controller 2. In this voltage balancing method, the capacitor voltages Vc1, Vc2, ..., VcN of the N input capacitors C1, C2, ..., CN are sensed and respectively compared with a reference voltage VR. The difference is processed by a dedicated control unit to calculate the duty cycle difference, and the final duty cycle is determined by the sum of the duty cycle difference and a common duty cycle D, which is substantially equal to 0.5. Meanwhile, the common switching frequency fsw is calculated by another control unit, which takes the difference between the sensed output voltage Vout and the output voltage reference VR,out, and generates the common switching frequency fsw according to the difference. Taking the conversion module 101 and the corresponding input capacitor C1 as an example, the capacitor voltage Vc1 of the input capacitor C1 is sensed and compared with the reference voltage VR to generate a difference, and the difference is processed by the control unit to calculate the duty cycle difference ΔD1. Then, the final duty cycle D1 is determined by the sum of the duty cycle difference ΔD1 and the common duty cycle D, and the controller 2 controls the switches in PWM operation of the conversion module 101 to operate with the final duty cycle D1.

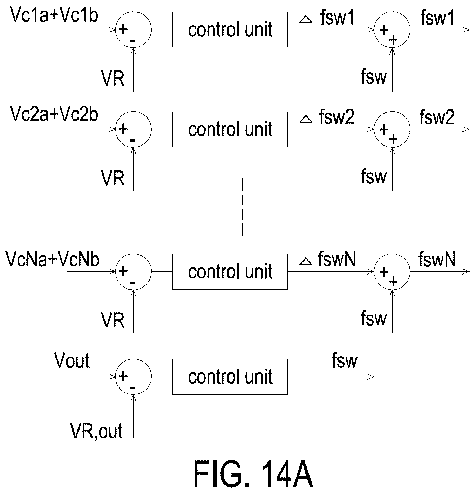

FIG. 14A illustrates a voltage balancing method based on the switching frequency control for the AC-AC converters 1d and 1f in FIG. 6 and FIG. 8, in accordance with an embodiment of the present disclosure. This voltage balancing method is performed by the controller 2. In this voltage balancing method, the capacitor voltages Vc1a, Vc2a, ..., VcNa of the N first input capacitors C1a, C2a, ..., CNa are sensed, and the capacitor voltages Vc1b, Vc2b, ..., VcNb of the N second input capacitors C1b, C2b, ..., CNb are sensed. The capacitor voltages of the first and second input capacitors coupled to the same primary circuit 11 are summed up, and the sum is compared with the reference voltage VR. The difference is processed by a dedicated control unit of the controller 2 to calculate the switching frequency difference, and the final switching frequency is determined by the sum of the switching frequency difference and the common switching frequency fsw. The common switching frequency fsw is calculated by another control unit of the controller 2, which takes the difference between the sensed output voltage Vout and the output voltage reference VR,out, and generates the common switching frequency fsw according to the difference. Taking the conversion module 101 and the corresponding first and second input capacitors C1a and C1b as an example, the capacitor voltage Vc1a of the first input capacitor C1a and the capacitor voltage Vclb of the second input capacitor C1b are sensed and summed up, the sum is compared with the reference voltage VR to generate a difference, and the difference is processed by the control unit to calculate the switching frequency difference Δfsw1. Then, the final switching frequency fsw1 is determined by the sum of the switching frequency difference Δfsw1 and the common switching frequency fsw, and the controller 2 controls the switches in PWM operation of the conversion module 101 to operate with the final switching frequency fsw1.

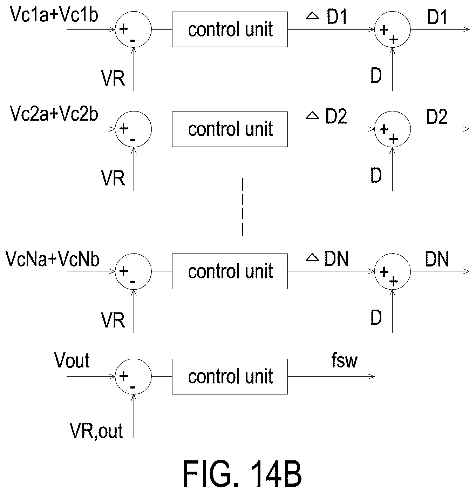

FIG. 14B illustrates a voltage balancing method based on the duty cycle control for the AC-AC converters 1d and 1f in FIG. 6 and FIG. 8, in accordance with an embodiment of the present disclosure. This voltage balancing method is performed by the controller 2. In this voltage balancing method, the capacitor voltages Vc1a, Vc2a, ..., VcNa of the N first input capacitors C1a, C2a, ..., CNa are sensed, and the capacitor voltages Vc1b, Vc2b, ..., VcNb of the N second input capacitors C1b, C2b, ..., CNb are sensed. The capacitor voltages of the first and second input capacitors coupled to the same primary circuit 11 are summed up, and the sum is compared with the reference voltage VR. The difference is processed by a dedicated control unit of the controller 2 to calculate the duty cycle difference, and the final duty cycle is determined by the sum of the duty cycle difference and the common duty cycle D, which is substantially equal to 0.5. Meanwhile, the common switching frequency fsw is calculated by another control unit of the controller 2, which takes the difference between the sensed output voltage Vout and the output voltage reference VR,out, and generates the common switching frequency fsw according to the difference. Taking the conversion module 101 and the corresponding first and second input capacitors C1a and C1b as an example, the capacitor voltage Vc1a of the first input capacitor C1a and the capacitor voltage Vclb of the second input capacitor C1b are sensed and summed up, the sum is compared with the reference voltage VR to generate a difference, and the difference is processed by the control unit to calculate the duty cycle difference ΔD1. Then, the final duty cycle D1 is determined by the sum of the duty cycle difference ΔD1 and the common duty cycle D, and the controller 2 controls the switches in PWM operation of the conversion module 101 to operate with the final duty cycle D1.

## Claims

1. An AC-AC converter (1a - FIG. 3A), **characterized by** comprising:
a primary circuit (11), configured to receive an input voltage (Vin), which is AC, and comprising:
a first bidirectional switch and a second bidirectional switch, electrically connected in series to form a first bridge arm, wherein the first bidirectional switch comprises a first upper switch (S1a) and a first lower switch (S1b) connected back-to-back, and the second bidirectional switch comprises a second upper switch (S3a) and a second lower switch (S3b) connected back-to-back; and
a third bidirectional switch and a fourth bidirectional switch, electrically connected in series to form a second bridge arm, which is electrically connected in parallel to the first bridge arm, wherein the third bidirectional switch comprises a third upper switch (S2a) and a third lower switch (S2b) connected back-to-back, and the fourth bidirectional switch comprises a fourth upper switch (S4a) and a fourth lower switch (S4b) connected back-to-back; wherein the first to fourth bidirectional switches are capable of operating in four quadrants in a voltage-current plane;
a secondary circuit (12), configured to provide an output voltage (Vout), which is AC, and comprising bidirectional switches capable of operating in the four quadrants in the voltage-current plane;
a transformer (TR), comprising a primary winding and a secondary winding electrically connected to the primary circuit (11) and the secondary circuit (12) respectively;
a resonant tank, coupled between the primary circuit (11) and the secondary circuit (12), and comprising a first resonant inductor (Lr1) and a first resonant capacitor (Crl), wherein the first resonant inductor (Lr1), the primary winding, and the first resonant capacitor (Crl) are electrically connected in series between a connection node of the first and second bidirectional switches and a connection node of the third and fourth bidirectional switches; and
a controller (2), configured to provide control signals for the first bidirectional switch, the second bidirectional switch, the third bidirectional switch, and the fourth bidirectional switch of the primary circuit (11) and the bidirectional switches of the secondary circuit (12), wherein a control signal of the first upper switch (S1a) and a control signal of the fourth upper switch (S4a) are the same, a control signal of the first lower switch (S1b) and a control signal of the fourth lower switch (S4b) are the same, a control signal of the second upper switch (S3a) and a control signal of the third upper switch (S2a) are the same, and a control signal of the second lower switch (S3b) and a control signal of the third lower switch (S2b) are the same,
wherein when the input voltage (Vin) is greater than a predefined threshold voltage (Vth), the controller (2) is configured to control the first lower switch (S1b) and the second lower switch (S3b) to maintain in an on state, and to control the control signal of the first upper switch (S1a) and the control signal of the second upper switch (S3a) to be PWM signals and complementary to each other,
wherein when the input voltage (Vin) is smaller than an additive inverse of the predefined threshold voltage (Vth), the controller (2) is configured to control the first upper switch (S1a) and the second upper switch (S3a) to maintain in the on state, and to control the control signal of the first lower switch (S1b) and the control signal of the second lower switch (S3b) to be PWM signals and complementary to each other.

2. An AC-AC converter (1c - FIG. 5A), **characterized by** comprising:
a primary circuit (11), configured to receive an input voltage (Vin), which is AC, and comprising a first bidirectional switch, a second bidirectional switch, a third bidirectional switch, and a fourth bidirectional switch, each capable of operating in four quadrants in a voltage-current plane, wherein the first bidirectional switch and the second bidirectional switch are electrically connected in series to form a first bridge arm, and the third bidirectional switch and the fourth bidirectional switch are electrically connected in series to form a second bridge arm, and the second bridge arm is electrically connected in series to the first bridge arm;
a secondary circuit (12), configured to provide an output voltage (Vout), which is AC, and comprising bidirectional switches capable of operating in the four quadrants in the voltage-current plane;
a transformer (TR), comprising a primary winding and a secondary winding electrically connected to the primary circuit (11) and the secondary circuit (12) respectively;
a resonant tank, coupled between the primary circuit (11) and the secondary circuit (12), and comprising a first resonant inductor (Lr1) and a first resonant capacitor (Crl), wherein the first resonant inductor (Lr1), the primary winding and the first resonant capacitor (Crl) are electrically connected in series between a connection node of the first and second bidirectional switches and a connection node of the third and fourth bidirectional switches; and
a controller (2), configured to provide control signals for the first bidirectional switch, the second bidirectional switch, the third bidirectional switch, and the fourth bidirectional switch of the primary circuit (11) and the bidirectional switches of the secondary circuit (12).

3. The AC-AC converter (1c) according to claim 2, wherein the first bidirectional switch comprises a first upper switch (S1a) and a first lower switch (S1b) connected back-to-back, the second bidirectional switch comprises a second upper switch (S2a) and a second lower switch (S2b) connected back-to-back, the third bidirectional switch comprises a third upper switch (S3a) and a third lower switch (S3b) connected back-to-back, and the fourth bidirectional switch comprises a fourth upper switch (S4a) and a fourth lower switch (S4b) connected back-to-back.

4. The AC-AC converter (1c) according to claim 3, wherein a control signal of the first upper switch (S1a) and a control signal of the fourth upper switch (S4a) are the same, a control signal of the first lower switch (S1b) and a control signal of the fourth lower switch (S4b) are the same, a control signal of the second upper switch (S2a) and a control signal of the third upper switch (S3a) are the same, and a control signal of the second lower switch (S2b) and a control signal of the third lower switch (S3b) are the same,
wherein when the input voltage (Vin) is greater than a predefined threshold voltage (Vth), the controller (2) is configured to control the first lower switch (S1b) and the second lower switch (S2b) to maintain in an on state, and to control the control signal of the first upper switch (S1a) and the control signal of the second upper switch (S2a) to be PWM signals and complementary to each other,
wherein when the input voltage (Vin) is smaller than an additive inverse of the predefined threshold voltage (Vth), the controller (2) is configured to control the first upper switch (S1a) and the second upper switch (S2a) to maintain in the on state, and to control the control signal of the first lower switch (S1b) and the control signal of the second lower switch (S2b) to be PWM signals and complementary to each other.

5. The AC-AC converter (1a - FIG. 3A, 1c - FIG. 5A) according to claim 1 or 4, wherein when a primary current (iL) provided by the primary circuit (11) is greater than a predefined threshold current (ith), the controller (2) is configured to sequentially turn off the first lower switch (S1b), turn on the second lower switch (S3b - FIG. 3A, S2b - FIG. 5A), turn off the first upper switch (S1a), and turn on the second upper switch (S3a - FIG. 3A, S2a - FIG. 5A); and when the primary current (iL) is smaller than an additive inverse of the predefined threshold current (ith), the controller (2) is configured to sequentially turn off the first upper switch (S1a), turn on the second upper switch (S3a - FIG. 3A, S2a - FIG. 5A), turn off the second lower switch (S3b - FIG. 3A, S2b - FIG. 5A), and turn on the first lower switch (S1b).

6. The AC-AC converter (1a - FIG. 3A, 1c - FIG. 5A) according to claim 5, wherein when the input voltage (Vin) is between the predefined threshold voltage (Vth) and the additive inverse of the predefined threshold voltage (Vth) and the primary current (iL) is between the predefined threshold current (ith) and the additive inverse of the predefined threshold current (ith), the controller (2) is configured to turn on all the switches of the primary circuit (11), to turn off all the switches of the primary circuit (11), or to keep previous states of all the switches of the primary circuit (11).

7. The AC-AC converter (1b, 1d) according to any of the preceding claims, further comprising an input capacitor (C1) electrically connected in parallel to the primary circuit (11), wherein the controller (2) is configured to adjust a switching frequency or a duty cycle of the primary circuit (11) according to a difference between a voltage of the input capacitor (Vc1) and a reference voltage (VR).

8. An AC-AC converter (1e - FIG. 7A), **characterized by** comprising:
a primary circuit (11), configured to receive an input voltage (Vin), which is AC, and comprising a first bidirectional switch, a second bidirectional switch, a third bidirectional switch, a fourth bidirectional switch and a flying capacitor (Cf), wherein the first to fourth bidirectional switches are capable of operating in four quadrants in a voltage-current plane, the first bidirectional switch and the second bidirectional switch are electrically connected in series to form a first bridge arm, and the third bidirectional switch and the fourth bidirectional switch are electrically connected in series to form a second bridge arm, the first bridge arm and the second bridge arm are electrically connected in series to form a switch branch, and the flying capacitor (Cf) is coupled between a connection node of the first and second bidirectional switches and a connection node of the third and fourth bidirectional switches;
a first input capacitor (C1a) and a second input capacitor (C1b), electrically connected in series to form a capacitor branch, which is electrically connected in parallel to the switch branch;
a secondary circuit (12), configured to provide an output voltage (Vout), which is AC, and comprising bidirectional switches capable of operating in the four quadrants in the voltage-current plane;
a transformer (TR), comprising a primary winding and a secondary winding electrically connected to the primary circuit (11) and the secondary circuit (12) respectively;
a resonant tank, coupled between the primary circuit (11) and the secondary circuit (12), and comprising a first resonant inductor (Lr1) and a first resonant capacitor (Crl), wherein the first resonant inductor (Lr1), the primary winding and the first resonant capacitor (Crl) are electrically connected in series between a connection node of the second and third bidirectional switches and a connection node of the first and second input capacitors; and
a controller (2), configured to provide control signals for the first bidirectional switch, the second bidirectional switch, the third bidirectional switch, and the fourth bidirectional switch of the primary circuit (11) and the bidirectional switches of the secondary circuit (12).

9. The AC-AC converter (1e) according to claim 8, wherein the first bidirectional switch comprises a first upper switch (S1a) and a first lower switch (S1b) connected back-to-back, the second bidirectional switch comprises a second upper switch (S4a) and a second lower switch (S4b) connected back-to-back, the third bidirectional switch comprises a third upper switch (S3a) and a third lower switch (S3b) connected back-to-back, and the fourth bidirectional switch comprises a fourth upper switch (S2a) and a fourth lower switch (S2b) connected back-to-back.

10. The AC-AC converter (1e) according to claim 9, wherein a control signal of the first upper switch (S1a) and a control signal of the second upper switch (S4a) are the same, a control signal of the first lower switch (S1b) and a control signal of the second lower switch (S4b) are the same, a control signal of the third upper switch (S3b) and a control signal of the fourth upper switch (S2a) are the same, and a control signal of the third lower switch (S3b) and a control signal of the fourth lower switch (S2b) are the same,
wherein when the input voltage (Vin) is greater than a predefined threshold voltage (Vth), the controller (2) is configured to control the first lower switch (S1b) and the third lower switch (S3b) to maintain in an on state, and to control the control signal of the first upper switch (S1a) and the control signal of the third upper switch (S3a) to be PWM signals and complementary to each other,
wherein when the input voltage (Vin) is smaller than an additive inverse of the predefined threshold voltage (Vth), the controller (2) is configured to control the first upper switch (S1a) and the third upper switch (S3a) to maintain in the on state, and to control the control signal of the first lower switch (S1b) and the control signal of the third lower switch (S3b) to be PWM signals and complementary to each other.

11. The AC-AC converter (1e) according to claim 10, wherein when a primary current (iL) provided by the primary circuit (11) is greater than a predefined threshold current (ith), the controller (2) is configured to sequentially turn off the first lower switch (S1b), turn on the third lower switch (S3b), turn off the first upper switch (S1a), and turn on the third upper switch (S3a); and when the primary current (iL) is smaller than an additive inverse of the predefined threshold current (ith), the controller (2) is configured to sequentially turn off the first upper switch (S1a), turn on the third upper switch (S3a), turn off the third lower switch (S3b), and turn on the first lower switch (S1b).

12. The AC-AC converter (1e) according to claim 11, wherein when the input voltage (Vin) is between the predefined threshold voltage (Vth) and the additive inverse of the predefined threshold voltage (Vth) and the primary current (iL) is between the predefined threshold current (ith) and the additive inverse of the predefined threshold current (ith), the controller (2) is configured to turn on all switches of the primary circuit (11), to turn off all the switches of the primary circuit (11), or to keep previous states of all the switches of the primary circuit (11).

13. The AC-AC converter (1f) according to any of claims 8 to 12, wherein the controller (2) is configured to adjust a switching frequency or a duty cycle of the primary circuit (11) according to a difference between a sum of voltages of the first and second input capacitors (Vc1a, Vc1b) and a reference voltage (VR).

14. The AC-AC converter (1b, 1d, 1f) according to any of the preceding claims, wherein the primary circuit (11), the resonant tank, the transformer (TR), and the secondary circuit (12) form a conversion module (101), the AC-AC converter (1b, 1d, 1f) comprises a plurality of conversion modules (101, 102, 10N), inputs of the plurality of conversion modules (101, 102, 10N) are electrically connected in series or parallel, and outputs of the plurality of conversion modules (101, 102, 10N) are electrically connected in series or parallel.

15. The AC-AC converter (1a) according to any of the preceding claims, wherein the resonant tank further comprises a second resonant inductor (Lr2) and a second resonant capacitor (Cr2) electrically connected between the secondary winding of the transformer (TR) and the secondary circuit (12).

16. The AC-AC converter (1a) according to any of the preceding claims, wherein the bidirectional switches of the secondary circuit (12) comprise a fifth bidirectional switch, a sixth bidirectional switch, a seventh bidirectional switch and an eighth bidirectional switch, each comprising an upper switch (Q1a, Q2a, Q3a, Q4a) and a lower switch (Q1b, Q2b, Q3b, Q4b) connected back-to-back, the fifth bidirectional switch and the sixth bidirectional switch, electrically connected in series to form a third bridge arm, the seventh bidirectional switch and the eighth bidirectional switch, electrically connected in series to form a fourth bridge arm, the third bridge arm is electrically connected in parallel to the fourth bridge arm.
